(19) Europäisches Patentamt / European Patent Office / Office européen des brevets

(11) **EP 4 333 114 B1**

(12) **EUROPEAN PATENT SPECIFICATION**

(45) Date of publication and mention
of the grant of the patent:
**26.02.2025 Bulletin 2025/09**

(51) International Patent Classification (IPC):
$H01M\ 4/1395^{(2010.01)}$    $H01M\ 4/04^{(2006.01)}$
$H01M\ 4/134^{(2010.01)}$    $H01M\ 4/62^{(2006.01)}$
$H01M\ 10/0525^{(2010.01)}$   $H01M\ 10/0562^{(2010.01)}$
$H01M\ 10/0585^{(2010.01)}$   $H01M\ 10/42^{(2006.01)}$
$H01M\ 10/44^{(2006.01)}$    $H01M\ 4/02^{(2006.01)}$

(21) Application number: **23192945.6**

(22) Date of filing: **23.08.2023**

(52) Cooperative Patent Classification (CPC):
**H01M 10/0562; H01M 4/0447; H01M 4/134;
H01M 4/1395; H01M 4/62; H01M 10/0525;
H01M 10/0585; H01M 10/4235;** H01M 10/446;
H01M 2004/027; H01M 2300/0068;
H01M 2300/0071; Y02E 60/10

(54) **NEGATIVE ELECTRODE-SOLID ELECTROLYTE SUB-ASSEMBLY, ALL-SOLID SECONDARY BATTERY INCLUDING THE SAME, AND METHOD OF PREPARING THE ALL-SOLID SECONDARY BATTERY**

NEGATIVELEKTRODEN-FESTELEKTROLYT-UNTERANORDNUNG, FESTKÖRPERSEKUNDÄRBATTERIE DAMIT UND VERFAHREN ZUR HERSTELLUNG DER FESTKÖRPERSEKUNDÄRBATTERIE

SOUS-ENSEMBLE ÉLECTRODE NÉGATIVE-ÉLECTROLYTE SOLIDE, BATTERIE SECONDAIRE ENTIÈREMENT SOLIDE LE COMPRENANT ET PROCÉDÉ DE PRÉPARATION DE LA BATTERIE SECONDAIRE ENTIÈREMENT SOLIDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.08.2022  KR 20220110151
28.07.2023  KR 20230098940**

(43) Date of publication of application:
**06.03.2024 Bulletin 2024/10**

(73) Proprietor: **Samsung Electronics Co., Ltd.
Suwon-si, Gyeonggi-do 16677 (KR)**

(72) Inventors:
• **KIM, Sewon
16678 Suwon-si (KR)**
• **KO, Dongsu
16678 Suwon-si (KR)**
• **KIM, Yongsu
16678 Suwon-si (KR)**
• **KIM, Jusik
16678 Suwon-si (KR)**
• **YOON, Gabin
16678 Suwon-si (KR)**

(74) Representative: **Elkington and Fife LLP
Prospect House
8 Pembroke Road
Sevenoaks, Kent TN13 1XR (GB)**

(56) References cited:
**CN-A- 110 429 281    US-A- 4 888 258**

• **XIAO ZHEXI ET AL: "Si@Si3N4@C composite with egg-like structure as high-performance anode material for lithium ion batteries", ENERGY STORAGE MATERIALS, vol. 24, 23 June 2019 (2019-06-23), pages 565 - 573, XP093119030, ISSN: 2405-8297, DOI: 10.1016/ j.ensm.2019.06.031**

**Description**

FIELD OF THE INVENTION

The disclosure relates to a negative electrode-solid electrolyte sub-assembly, an all-solid secondary battery including the same, and a method of preparing the all-solid secondary battery.

BACKGROUND OF THE INVENTION

Recently, batteries having high energy density and excellent safety have actively been developed due to industrial demand. For example, lithium-ion batteries have been put into practical use not only in the fields of information-related devices and communication devices, but also in the automotive field. In the automotive field, safety is especially important because it relates to life.

Lithium-ion batteries currently available in the market use an electrolytic solution containing a flammable organic solvent, and thus, when a short circuit occurs, there is a possibility of overheating and the occurrence of fires. Accordingly, all-solid secondary batteries using solid electrolytes have been proposed.

Since all-solid secondary batteries do not use a flammable organic solvent, even if a short circuit occurs, the possibility of causing a fire or an explosion may be greatly reduced. Therefore, such all-solid secondary batteries may greatly improve safety, as compared with lithium-ion batteries using an electrolytic solution.

In order to increase the energy density of such all-solid secondary batteries, lithium may be used as a negative active material. For example, it is known that the specific capacity (capacity per unit mass) of lithium metal is about 10 times that of graphite, which is generally used as a negative active material. Therefore, it is possible to increase capacity while lightning the all-solid secondary battery using lithium as a negative active material.

However, in a structure in which a solid electrolyte is used as the electrolyte, and lithium is used as a negative active material, lithium metal may be non-uniformly deposited on a surface of the solid electrolyte during a charging process, which may induce cracks in the solid electrolyte. Cracks in the solid electrolyte may induce short circuit in all-solid secondary batteries. Thus, there remains a need for an improved all-solid secondary battery.

SUMMARY OF THE INVENTION

Provided is a negative electrode-solid electrolyte sub-assembly for an all-solid secondary battery in which short circuit is prevented and rate capability and lifespan characteristics are improved.

Provided are an all-solid secondary battery with improved cell performance by including the negative electrode-solid electrolyte sub-assembly for an all-solid secondary battery and a method of preparing the all-solid secondary battery.

Additional aspects will be set forth in part in the description which follows and, in part, will be apparent from the description, or may be learned by practice of the presented embodiments of the disclosure.

According to an aspect of the disclosure,

a negative electrode-solid electrolyte sub-assembly includes a negative electrode current collector, a first negative active material layer disposed on the negative electrode current collector, an interlayer disposed on the first negative active material layer and opposite the negative electrode current collector, and a solid electrolyte disposed on the interlayer and opposite the first negative active material layer, wherein the first negative active material layer may include a mixture of a compound of Formula 1 and a compound of Formula 2, a composite of the compound of Formula 1 and the compound of Formula 2, or a combination thereof,

Formula 1 $\qquad$ $Li_xM1_y$

wherein, in Formula 1, M1 is a first metal and is an element capable of forming a compound or an alloy with lithium and oxygen, and

$$0 \leq x \leq 20 \text{ and } 1 \leq y \leq 10,$$

Formula 2 $\qquad$ $M2_aN_b$

wherein, in Formula 2, M2 is a second metal and is lithium, an element capable of forming a compound or an alloy with lithium and nitrogen, or a combination thereof, and

$$1 \le x \le 15 \text{ and } 1 \le b \le 10,$$

wherein the interlayer includes a third metal material, lithium oxide, or a combination thereof, and the third metal material includes a third metal oxide, an oxide including a third metal and lithium, lithium oxide, or a combination thereof, wherein the third metal is an element of Groups 2 to 15.

The compound of Formula 1 may be $Li_3Al$, $Li_2Zn$, $Li_4Sn$, $Li_xSi_y$ wherein $1 \le x \le 3$ and $1 \le y \le 3$, $Li_xGe_y$ wherein $1 \le x \le 3$ and $1 \le y \le 3$, $Li_xCu_y$ wherein $1 \le x \le 3$ and $1 \le y \le 3$, $Li_xSn$ wherein $0 < x < 5$, $Li_xZn$ wherein $0 < x < 5$, $Li_xAl$ wherein $0 < x < 5$, $Li_xSb$ wherein $0 < x < 4$, $Li_xSi$ wherein $0 < x < 5$, $Li_xAu$ wherein $0 < x < 5$, $Li_xAg$ wherein $0 < x < 10$, $Li_xIn$ wherein $0 < x < 5$, $Li_xBi$ wherein $0 < x < 5$, $Li_xGa$ wherein $0 < x < 5$, $Li_xTe$ wherein $0 < x < 5$, $Li_xGe$ wherein $0 < x < 5$, $Li_xMg$ wherein $0 < x < 7$, or a combination thereof, and wherein the compound of Formula 2 is $Li_3N$, $Al_aN_b$ wherein $1 \le a \le 3$ and $1 \le b \le 4$, $Zn_aN_b$ wherein $1 \le a \le 3$ and $1 \le b \le 4$, $Sn_aN_b$ wherein $1 \le a \le 3$ and $1 \le b \le 4$, $Si_aN_b$ wherein $1 \le a \le 3$ and $1 \le b \le 4$, $Ge_aN_b$ wherein $1 \le a \le 3$ and $1 \le b \le 4$, $Cu_aN_b$ wherein $1 \le a \le 3$ and $1 \le b \le 4$, $In_aN_b$ wherein $1 \le a \le 3$ and $1 \le b \le 4$, $Ga_aN_b$ wherein $1 \le a \le 3$ and $1 \le b \le 4$, $Ti_aN_b$ wherein $1 \le a \le 3$ and $1 \le b \le 4$, $Zr_aN_b$ wherein $1 \le a \le 3$ and $1 \le b \le 4$, $Nb_aN_b$ wherein $1 \le a \le 3$ and $1 \le b \le 4$, or a combination thereof, or wherein the compound of Formula 2 is $Li_3N$, $AlN$, $Zn_3N_2$, $Sn_3N_4$, $Si_3N_4$, $Ge_3N_4$, $Cu_3N$, or a combination thereof.

A thickness of the first negative active material layer is in a range of about 1 nanometer to about 100 micrometers.

The lithium oxide may be, for example, $Li_2O$.

In Formula 1, $1 \le x \le 18$, $1 \le x \le 16$, $1 \le x \le 15$, $1 \le x \le 14$, $1 \le x \le 12$, $1 \le x \le 10$, $1 \le x \le 8$, $1 \le x \le 5$, or $1 \le x \le 3$, and $1 \le y \le 3$.

A volume of the first negative active material layer after charging the all-solid secondary battery may be 200 percent or less than a volume of the first negative active material layer after discharging.

The second negative active material layer may be further formed as a precipitation layer during charging, during the disposing of the second negative active material layer between the current collector and the first negative active material layer, or during both of the charging and the disposing of the second negative active material layer between the current collector and the first negative active material layer of the all-solid secondary battery. The second negative active material layer may include lithium metal, a lithium alloy, or a combination thereof.

According to another aspect of the disclosure, an all-solid secondary battery includes a positive electrode and the negative electrode-solid electrolyte sub-assembly disposed on the positive electrode, wherein the solid electrolyte may be between the positive electrode and the negative electrode.

During charging of the all-solid secondary battery, the first metal in the first negative active material layer may form an alloy with lithium.

According to another aspect of the disclosure,

a method of preparing the all-solid secondary battery includes providing the positive electrode, disposing the solid electrolyte on the positive electrode, disposing the interlayer on a first surface of the solid electrolyte opposite a second surface of the solid electrolyte on which the positive electrode is disposed, disposing the first negative active material layer on the interlayer and opposite the solid electrolyte, and disposing the negative electrode current collector on the first negative active material layer opposite the interlayer, to prepare the all-solid secondary battery, wherein the first negative active material layer may include a mixture of a compound of Formula 1 and a compound of Formula 2, a composite of the compound of Formula 1 and the compound of Formula 2, or a combination thereof,

Formula 1        $Li_xM1_y$

wherein, in Formula 1, M1 is the first metal and may be an element capable of forming a compound or an alloy with lithium and oxygen, and

$$0 \le x \le 20 \text{ and } 1 \le y \le 10,$$

Formula 2        $M2_aN_b$

wherein, in Formula 2, M2 is a second metal and may be lithium, an element capable of forming a compound or an alloy with lithium and nitrogen, or a combination thereof, and

$$1 \le x \le 15 \text{ and } 1 \le b \le 10.$$

The disposing of the interlayer and the first negative active material layer may include

depositing the first metal on the solid electrolyte in a nitrogen atmosphere to form a first layer including a first metal nitride layer, and
contacting the first layer with lithium,
charging the all-solid secondary battery to supply lithium to the first layer, heat-treating the first layer, or a combination thereof,
to simultaneously form the interlayer and the first negative active material layer using the first layer.

The disposing of the interlayer and the first negative active material layer may include

disposing the first metal on the solid electrolyte in an oxygen atmosphere to form a second layer including a first metal oxide layer and to form the interlayer therefrom, and
depositing the first metal on the second layer in a nitrogen atmosphere to form the first layer including the first metal nitride layer and to form the first negative active material layer therefrom.

The method of preparing the all-solid secondary battery may further include providing a second negative active material layer between the negative electrode current collector and the first negative active material layer, and the second negative active material layer may include a fourth metal.

The second negative active material layer may be formed as a precipitation layer during charging and discharging, during disposing (e.g., bonding) of the negative electrode current collector on the first negative active material layer, or during both of the charging and discharging, and the disposing of the negative electrode current collector on the first negative active material layer of the all-solid secondary battery, and the second negative active material layer may include lithium metal, a lithium alloy, or a combination thereof.

Also disclosed is a negative electrode-solid electrolyte sub-assembly for an all-solid secondary battery including:

a first negative active material layer;
an interlayer disposed on the first negative active material layer; and
a solid electrolyte disposed on the interlayer and opposite the first negative active material layer,

wherein the first negative active material layer comprises a mixture of a compound of Formula 1 and a compound of Formula 2, a composite of the compound of Formula 1 and the compound of Formula 2, or a combination thereof,

$$\text{Formula 1} \qquad \text{Li}_x\text{M1}_y$$

wherein, in Formula 1, M1 is a first metal and is an element capable of forming a compound or an alloy with lithium and oxygen, and

$$0 \leq x \leq 20 \text{ and } 1 \leq y \leq 10,$$

$$\text{Formula 2} \qquad \text{M2}_a\text{N}_b$$

wherein, in Formula 2, M2 is a second metal and is lithium, an element capable of forming a compound or an alloy with lithium and nitrogen, or a combination thereof, and

$$1 \leq a \leq 15 \text{ and } 1 \leq b \leq 10,$$

wherein the interlayer comprises a third metal material, lithium oxide, or a combination thereof, and
the third metal material comprises a third metal oxide, an oxide comprising a third metal and lithium, or a combination thereof,
wherein the third metal is an element of Groups 2 to 15.

Also disclosed is a negative electrode for an all-solid secondary battery including:

a negative electrode current collector;
a first negative active material layer disposed on the negative electrode current collector;

an interlayer disposed on the first negative active material layer and opposite the negative electrode current collector; wherein the first negative active material layer comprises a mixture of a compound of Formula 1 and a compound of Formula 2, a composite of the compound of Formula 1 and the compound of Formula 2, or a combination thereof,

Formula 1　　　　　　　$Li_xM1_y$

wherein, in Formula 1, M1 is a first metal and is an element capable of forming a compound or an alloy with lithium and oxygen, and $0 \leq x \leq 20$ and $1 \leq y \leq 10$,

Formula 2　　　　　　　$M2_aN_b$

wherein, in Formula 2, M2 is a second metal and is lithium, an element capable of forming a compound or an alloy with lithium and nitrogen, or a combination thereof, and $1 \leq a \leq 15$ and $1 \leq b \leq 10$,

wherein the interlayer comprises a third metal material, lithium oxide, or a combination thereof, and the third metal material comprises a third metal oxide, an oxide comprising a third metal and lithium, lithium oxide, or a combination thereof, wherein the third metal is an element of Groups 2 to 15. The method of preparing the all-solid secondary battery further comprises providing a second negative active material layer between the negative electrode current collector and the first negative active material layer, wherein the second negative active material layer comprises a fourth metal material, and the fourth metal material is a fourth metal, a lithium alloy of lithium and the fourth metal, or a combination thereof, wherein the fourth metal is an element of Groups 2 to 15.

The second negative active material layer is formed as a precipitation layer during charging, during the disposing of the negative electrode current collector on the first negative active material layer, or during both of the charging and the disposing of the negative electrode current collector on the first negative active material layer, and the second negative active material layer is lithium metal, a lithium alloy, or a combination thereof.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a view illustrating a structure of an embodiment of a negative electrode-solid electrolyte sub-assembly of an all-solid secondary battery;
FIG. 2A shows the results of a scanning electron microscope (SEM) analysis on the all-solid secondary battery prepared in Example 1 after charging;
FIG. 2B is an enlarged view of a portion in FIG. 2A;
FIGS. 2C to 2E show results of a scanning electron microscopy and energy dispersive spectroscopy (SEM-EDS) analysis on a solid electrolyte/interlayer/first negative active material layer/second negative active material layer laminate prepared in Example 1, wherein FIG. 2C is a tin (Sn) map, FIG. 2D is a nitrogen (N) map, and FIG. 2E is an oxygen (O) map;
FIG. 3A is a graph of imaginary resistance (Z", ohm·cm$^2$) versus real resistance (Z', ohm·cm$^2$) showing impedance characteristics of an all-solid secondary battery including a negative electrode-solid electrolyte sub-assembly according to Example 1;
FIG. 3B is a graph of potential (volts versus Li$^+$/Li) versus capacity (mAh/cm$^2$) and shows the results of charging and discharging of an all-solid secondary battery including a negative electrode-solid electrolyte sub-assembly according to Example 1;
FIG. 3C is a graph of capacity per unit area (mAh/cm$^2$) versus cycles showing lifespan characteristics of an all-solid secondary battery including a negative electrode-solid electrolyte sub-assembly according to Example 1;
FIGS. 4A to 4D are each an image showing the results of Transmission Electron Microscope(TEM)-energy dispersive spectroscopy (EDS) mapping analysis for Li, Sn, O, and N, respectively, of an all-solid secondary battery including a negative electrode-solid electrolyte sub-assembly according to Example 1;
FIGS. 5A to 5D are each an image showing the results of TEM-electron energy loss spectroscopy (EELS) mapping analysis of an all-solid secondary battery including a negative electrode-solid electrolyte sub-assembly according to Example 1, in which FIG. 5A shows a Li response, FIG. 5B shows a Sn response, FIG. 5C shows an O response, and FIG. 5D shows a N response;
FIGS. 6A to 6E are each a graph showing the results of TEM-EDS mapping analysis of an all-solid secondary battery including a negative electrode-solid electrolyte sub-assembly according to Example 2, in which FIG. 6A is a secondary electron image, FIG. 6C is a Cu map, FIG. 6D is a N map, and FIG. 6E is an O map;

FIG. 7A is a graph of imaginary resistance (Z", ohm·cm$^2$) versus real resistance (Z', ohm·cm$^2$) showing impedance characteristics of an all-solid secondary battery including a negative electrode-solid electrolyte sub-assembly according to Example 2;

FIG. 7B is a graph of potential (volts versus Li$^+$/Li) versus capacity per unit area (mAh/cm$^2$) and shows the results of charging and discharging analysis of an all-solid secondary battery including a negative electrode-solid electrolyte sub-assembly according to Example 2;

FIG. 7C is a graph of capacity per unit area (mAh/cm$^2$) versus cycles showing lifespan characteristics of an all-solid secondary battery including a negative electrode-solid electrolyte sub-assembly according to Example 2;

FIG. 7D is a graph of imaginary resistance (Z", ohm·cm$^2$) versus real resistance (Z', ohm·cm$^2$) showing impedance characteristics of an all-solid secondary battery including a negative electrode-solid electrolyte sub-assembly according to Example 3;

FIGS. 8A to FIG. 8C are each a graph of intensity (arbitrary units, a.u.) versus binding energy (electronvolts, eV) showing the results of X-ray photoelectron spectroscopy (XPS) analysis with respect to formation of a first negative active material layer after reaction of Li with CuNx that is a precursor for forming a first negative active material layer according to Example 2, wherein FIGS. 8A, 8B, and 8C are each the XPS analysis results for Li, Cu, and N, respectively;

FIG. 9A is a graph of imaginary resistance (Z", ohm·cm$^2$) versus real resistance (Z', ohm·cm$^2$) showing impedance characteristics of an all-solid secondary battery including a negative electrode-solid electrolyte sub-assembly according to Comparative Example 1;

FIG. 9B is a graph of potential (volts vs Li$^+$/Li) versus capacity per unit area (mAh/cm$^2$) showing charging and discharging results for an all-solid secondary battery including a negative electrode-solid electrolyte sub-assembly according to Comparative Example 1;

FIG. 10A is a graph of imaginary resistance (Z", ohm·cm$^2$) versus real resistance (Z', ohm·cm$^2$) showing impedance characteristics of an all-solid secondary battery including a negative electrode-solid electrolyte sub-assembly according to Comparative Example 2;

FIG. 10B is a graph of potential (volts vs Li$^+$/Li) versus capacity per unit area (mAh/cm$^2$) showing charging and discharging results for an all-solid secondary battery including a negative electrode-solid electrolyte sub-assembly according to Comparative Example 2;

FIG. 11A is a graph of imaginary resistance (Z", ohm·cm$^2$) versus real resistance (Z', ohm·cm$^2$) showing impedance characteristics of an all-solid secondary battery including a negative electrode-solid electrolyte sub-assembly according to Comparative Example 3;

FIG. 11B is a graph of potential (volts vs Li$^+$/Li) versus capacity (mAh/cm$^2$) showing charging and discharging results for an all-solid secondary battery including a negative electrode-solid electrolyte sub-assembly according to Comparative Example 3;

FIG. 12A is a graph of imaginary resistance (Z", ohm·cm$^2$) versus real resistance (Z', ohm·cm$^2$) showing impedance characteristics of an all-solid secondary battery including a negative electrode-solid electrolyte sub-assembly according to Comparative Example 4;

FIG. 12B is a graph of potential (volts vs Li$^+$/Li) versus capacity (mAh/cm$^2$) showing charging and discharging results for an all-solid secondary battery including a negative electrode-solid electrolyte sub-assembly according to Comparative Example 4;

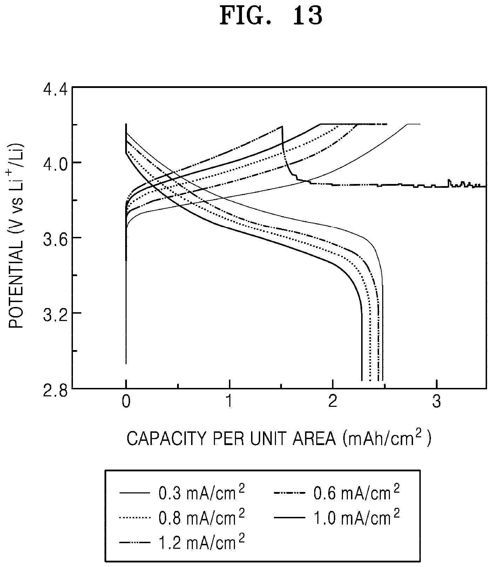

FIG. 13 is a graph of potential (volts vs Li$^+$/Li) versus capacity (mAh/cm$^2$) showing charging and discharging results for an all-solid secondary battery including a negative electrode-solid electrolyte sub-assembly according to Comparative Example 5; and

FIG. 14 is a schematic view according to an embodiment illustrating a structure of an all-solid secondary battery.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain various aspects. These embodiments are provided so that this disclosure will be thorough and complete, and will fully convey the scope of the invention to those skilled in the art. As used herein, the term "and/or" includes any and all combinations of one or more of the associated listed items. Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third," etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

End points in ranges may be independently combined. "About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, with reference to the attached drawings, a negative electrode-solid electrolyte sub-assembly for an all-solid secondary battery, an all-solid secondary battery including the negative electrode layer, and a method of preparing the all-solid secondary battery will be described in further detail. Like reference numerals in the drawings denotes like components, and sizes of components in the drawings may be exaggerated for clarity and convenience of explanation. In addition, embodiments described herein are illustrative purposes only, and various changes in form and details may be made therein.

To provide an all-solid secondary battery that may reduce an interfacial resistance between the negative electrode and the solid electrolyte while preventing cracking of the solid electrolyte, an all-solid secondary battery having a structure has been proposed comprising a lithium metal layer in which a negative electrode is in contact with a negative electrode current collector, a negative active material layer including a carbonaceous active material disposed on the lithium metal layer, and a contact layer including a metal and formed between the negative active material layer and the solid electrolyte or the structure to which a negative electrode oxide protective layer is applied.

However, in such an all-solid secondary battery, the contact layer in contact with the solid electrolyte comprises only the metal, and thus, electron conduction is not prevented to thereby cause short circuit due to lithium precipitation inside the solid electrolyte. Also, when reacting with lithium during charging and discharging of the all-solid secondary battery, side reactions such as aggregation or volume expansion may occur, resulting in deterioration of lifespan characteristics. In addition, when the oxide protective layer is used, the conductivity of lithium ions is low such that the oxide protective layer may act as a resistance element when driving a battery during charge and discharge.

To resolve the foregoing problem, the present inventors provide a negative electrode-solid electrolyte sub-assembly which includes: a negative electrode current collector; a first negative active material layer disposed on the negative electrode current collector; an interlayer disposed on the first negative active material layer and opposite the negative electrode current collector, and a solid electrolyte disposed on the interlayer and opposite the first negative active material layer,

wherein the first negative active material layer may include a mixture of a compound of Formula 1 and a compound of Formula 2, a composite of the compound of Formula 1 and the compound of Formula 2, or a combination thereof:

Formula 1 $\quad\quad\quad Li_xM1_y$

wherein, in Formula 1, M1 is a first metal and is an element capable of forming a compound or an alloy with lithium and oxygen, and

$$0 \leq x \leq 20 \text{ and } 1 \leq y \leq 10,$$

Formula 2 $\quad\quad\quad M2_aN_b$

wherein, in Formula 2, M2 is a second metal and is lithium, an element capable of forming a compound or an alloy with lithium and nitrogen, or a combination thereof,

$$1 \leq x \leq 15 \text{ and } 1 \leq b \leq 10,$$

wherein the interlayer comprises a third metal material, and
the third metal material comprises a third metal oxide, an oxide including a third metal and lithium, lithium oxide, or a combination thereof, wherein the third metal is an element of Groups 2 to 15.

In Formula 1, x and y may each independently be $1 \leq x \leq 3$ and $1 \leq y \leq 3$, and in Formula 2, a and b may each independently be $1 \leq a \leq 3$ and $1 \leq b \leq 4$.

The first negative active material layer may further include a compound represented by Formula 3:

Formula 3 $\quad\quad\quad M2_aO_b$

wherein, in Formula 3, the second metal (M2) may be lithium, an element capable of forming a compound or an alloy with lithium and nitrogen; or a combination thereof, and

$$1 \leq a \leq 20 \text{ and } 1 \leq b \leq 10.$$

In Formula 3, M2 may be, for example, Li. In addition, $1 \leq a \leq 3$ and $1 \leq b \leq 4$.

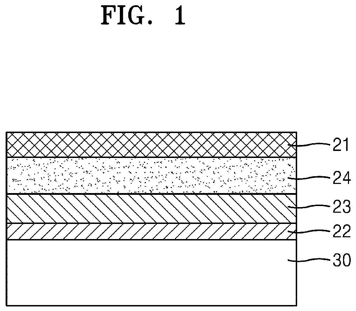

FIG. 1 is a schematic view of a structure of an embodiment of a laminate of the negative electrode-solid electrolyte sub-assembly for an all-solid secondary battery.

A first negative active material layer 23 may be between a solid electrolyte 30 and a negative electrode current collector 21. An interlayer 22 may be located between the solid electrolyte 30 and the first negative active material layer 23, and a second negative active material layer 24 may be located between the first negative active material layer 23 and the negative electrode current collector 21.

The first negative active material layer 23 may include, as a negative active material, a mixture of a compound of Formula 1 and a compound of Formula 2 as a nitride, a composite of the compound of Formula 1 and the compound of Formula 2, or a combination thereof. As such, the first negative active material layer 23 contains a material that may form a compound with fast lithium ion movement when reacting with lithium and provides a uniform and fast lithium ion movement path.

When the negative active material is made of only a metal material, durability of the negative electrode may not be maintained due to aggregation or volume expansion during the reaction with lithium during battery charging and discharging, and deterioration may occur, thus resulting in deterioration of high rate characteristics due to slow lithium movement. In addition, movement of electrons may not be effectively prevented, and thus, electrons may flow through the solid electrolyte, causing a short circuit in the battery.

However, the first negative active material layer 23 according to an embodiment may also include a nitride as well as the compound of Formula 1. When the first negative active material layer contains only the compound of Formula 1, it is difficult to maintain the durability of the negative electrode due to volume change. However, the first negative active material layer according to an embodiment may contain the nitride compound of Formula 2 to maintain the structure during charging and discharging. In addition, short circuit of the solid electrolyte due to the pressure may be delayed by relieving the pressure applied to the solid electrolyte by relieving the volume expansion of the negative electrode during charging and discharging. In addition, as the first negative active material layer may contain nitride, it provides greater lithium ion conductivity compared with the negative active material layer containing a negative active material and an oxide. In addition, the first negative active material layer may serve as a buffer layer that may buffer volume expansion caused by lithium intercalation and deintercalation during charging and discharging.

As the interlayer 22 may contain the third metal oxide, electron conduction in the solid electrolyte may be prevented. As the interlayer 22 may contain oxide composition similar with that of the solid electrolyte, e.g., an oxide-based (i.e., oxide) solid electrolyte, binding force of the interlayer 22 to the solid electrolyte 30 may be excellent. As a thickness of the interlayer 22 is thin, fast lithium movement in the negative electrode may be ensured because the interlayer 22 do not act as a resistance element against movement of lithium ions. In addition, lithium introduced through the solid electrolyte during charging is induced to rapidly diffuse through the metal layer, and thus even when charging and discharging are repeated, the contact between the solid electrolyte 30 and the first negative active material layer 23 may be improved, and the shape may not change. Thus, the interlayer 22 may contribute to maintaining durability and may reduce the interfacial resistance between the solid electrolyte 30 and the first negative active material layer 23.

The second negative active material layer 24 induces lithium metal to precipitate on a current collector layer, thus preventing direct contact between the solid electrolyte and the lithium metal. When charging using lithium or a metal that may easily cause lithium alloy formation, lithium is mainly precipitated between the first negative active material layer and the current collector. Thus, it is possible to effectively prevent deterioration of the first negative active material layer and the interlayer due to short circuit and repeated charging and discharging of the battery.

The negative electrode-solid electrolyte sub-assembly according to an embodiment may be applied to the negative electrode of a multi-layered structure as described above, thereby preparing an all-solid secondary battery that may allow stable operation.

In Formula 1, M1 may be aluminum (Al), zinc (Zn), tin (Sn), silicon (Si), germanium (Ge), copper (Cu), indium (In), gallium (Ga), titanium (Ti), zirconium (Zr), niobium( Nb), antimony (Sb), bismuth (Bi), gold (Au), platinum (Pt), palladium (Pd), nickel (Ni), iron (Fe), cobalt (Co), chromium (Cr), magnesium (Mg), cesium (Cs), Cerium (Ce), silver (Ag), sodium (Na), potassium (K), calcium (Ca), yttrium (Y),), tantalum (Ta), hafnium (Hf), barium (Ba), vanadium (V), strontium(Sr), tellurium (Te), lanthanum (La), or a combination thereof.

In Formula 2, M2 may be aluminum (Al), zinc (Zn), tin (Sn), silicon (Si), germanium (Ge), copper (Cu), indium (In), gallium (Ga), titanium (Ti), zirconium (Zr), niobium( Nb), antimony (Sb), bismuth (Bi), gold (Au), platinum (Pt), palladium (Pd), nickel (Ni), iron (Fe), cobalt (Co), chromium (Cr), magnesium (Mg), cesium (Cs), Cerium (Ce), silver (Ag), sodium (Na), potassium (K), calcium (Ca), yttrium (Y), tantalum (Ta), hafnium (Hf), barium (Ba), vanadium (V), strontium(Sr), tellurium (Te), lanthanum (La), or a combination thereof.

The compound of Formula 1 may be, for example, $Li_xAl$ (wherein $0<x<5$), $Li_xSn$ (wherein $0<x<5$), $Li_xSi_y$ (wherein $1\leq x\leq 3$ and $1\leq y\leq 3$), $Li_xGe_y$ (wherein $1\leq x\leq 3$ and $1\leq y\leq 3$), $Li_xCu_y$ (wherein $1\leq x\leq 3$ and $1\leq y\leq 3$), LixZn (wherein $0<x<5$), LixSb (wherein $0<x<4$), LixSi (wherein $0<x<5$), LixAu (wherein $0<x<5$), LixAg (wherein $0<x<10$), LixIn (wherein $0<x<5$), LixBi (wherein $0<x<5$), LixGa (wherein $0<x<5$), LixTe (wherein $0<x<5$), LixGe (wherein $0<x<5$), LixMg (wherein $0<x<7$), or a combination thereof.

The compound of Formula 1 may be, for example, $Li_3Al$, $Li_2Zn$, $Li_4Sn$, $Li_xSi_y$ (wherein $1\leq x\leq 3$ and $1\leq y\leq 3$), $Li_xGe_y$ (wherein $1\leq x\leq 3$ and $1\leq y\leq 3$), $Li_xCu_y$ ($1\leq x\leq 3$, $1\leq y\leq 3$), or a combination thereof.

LixSn (wherein $0<x<5$) may be, for example, $Li_4Sn$ or $Li_{4.4}Sn$.

LixSi (wherein $0<x<5$) may be, for example, $Li_4Si$ or $Li_{4.4}Si$.

LixGe (wherein $0<x<5$) may be, for example, $Li_{15}Ge_4$ ($Li_{3.75}Ge$) or $Li_9Ge_4$, ($Li_{2.25}Ge$).

LixAl (wherein $0<x<4$) may be, for example, $Li_3Al$.

The compound of Formula 2 may be, for example, $Li_3N$, $Al_aN_b$, (wherein $1\leq a\leq 3$ and $1\leq b\leq 4$), $Zn_aN_b$ (wherein $1\leq a\leq 3$ and $1\leq b\leq 4$), $Sn_aN_b$ (wherein $1\leq a\leq 3$ and $1\leq b\leq 4$), $Si_aN_b$ (wherein $1\leq a\leq 3$ and $1\leq b\leq 4$), $Ge_aN_b$ (wherein $1\leq a\leq 3$ and $1\leq b\leq 4$),

$Cu_aN_b$ (wherein $1\leq a\leq 3$ and $1\leq b\leq 4$), $In_aN_b$ (wherein $1\leq a\leq 3$ and $1\leq b\leq 4$), $Ga_aN_b$ (wherein $1\leq a\leq 3$ and $1\leq b\leq 4$), $Ti_aN_b$ (wherein $1\leq a\leq 3$ and $1\leq b\leq 4$), $Zr_aN_b$ (wherein $1\leq a\leq 3$ and $1\leq b\leq 4$), $Nb_aN_b$ (wherein $1\leq a\leq 3$ and $1\leq b\leq 4$), or a combination thereof.

The compound of Formula 2 may be, for example, $Li_3N$, AlN, $Zn_3N_2$, $Sn_aN_b$, $Si_aN_b$, $Ge_aN_b$, $Cu_3N$, or a combination thereof, wherein $1\leq a\leq 3$ and $1\leq b\leq 4$.

$Sn_aN_b$ may be, for example, $Sn_3N_4$. $Si_aN_b$ may be, for example, $Si_3N_4$. $Ge_aN_b$ may be, for example, $Ge_3N_4$.

The compound of Formula 2 may contain $Li_3N$. $Li_3N$ may have a high ion conductivity as compared with lithium oxide and lithium fluoride.

A thickness of the first negative active material layer may be in a range of about 1 nanometer (nm) to about 100 micrometers ($\mu$m), about 10 nm to about 100 $\mu$m, about 20 nm to about 50 $\mu$m, about 50 nm to about 40 $\mu$m, about 100 nm to about 30 $\mu$m, or about 300 nm to about 20 $\mu$m. When the thickness of the first negative active material layer is within any of these ranges, the all-solid secondary battery may have excellent cycle characteristics. When the thickness of the first negative active material layer is within any of these ranges, deterioration of the negative electrode may be prevented during repeated charging and discharging, and lithium movement may be increased to thereby manufacture an all-solid secondary battery with improved high-rate characteristics and lifespan characteristics.

According to an embodiment, four to five peaks may be observed in a region of about 393 electronvolts to about 405 electronvolts in a graph of intensity versus binding energy, when the first negative active material layer is analyzed by X-ray photoelectron spectroscopy (XPS) . The four to five peaks may be with respect to, for example, $Li_3N$.

A thickness of the interlayer may be in a range of about 5 nm to about 100 nm, about 5 nm to about 50 nm, about 10 nm to about 30 nm, or about 10 nm to about 20 nm. When the thickness of the interlayer is within any of these ranges, conduction of electrons to the solid electrolyte may be blocked, such that it is possible to prevent occurrence of short circuit due to lithium precipitation into the solid electrolyte.

In the present specification, when the thickness of each layer is not uniform, an average thickness of each layer may be defined by calculating an average value. The average thickness may be calculated by analyzing the thicknesses of each layer by scanning electron microscopy.

The first negative active material layer may further include a compound represented by Formula 3:

$$\text{Formula 3} \qquad M2_aO_b$$

wherein, in Formula 2, a second metal (M2) may be lithium, an element capable of forming a compound or an alloy with lithium and nitrogen, or a combination thereof, and

$$1 \leq a \leq 20 \text{ and } 1 \leq b \leq 10.$$

In Formula 3, M2 may be aluminum (Al), zinc (Zn), tin (Sn), silicon (Si), germanium (Ge), copper (Cu), indium (In), gallium (Ga), titanium (Ti), zirconium (Zr), niobium( Nb), antimony (Sb), bismuth (Bi), gold (Au), platinum (Pt), palladium (Pd), nickel (Ni), iron (Fe), cobalt (Co), chromium (Cr), magnesium (Mg), cesium (Cs), Cerium (Ce), silver (Ag), sodium (Na), potassium (K), calcium (Ca), yttrium (Y), tantalum (Ta), hafnium (Hf), barium (Ba), vanadium (V), strontium(Sr), tellurium (Te), lanthanum (La), or a combination thereof.

In Formula 3, $1 \leq a \leq 18$, $1 \leq a \leq 16$, $1 \leq a \leq 14$, $1 \leq a \leq 15$, $1 \leq a \leq 12$, $1 \leq a \leq 10$, $1 \leq a \leq 8$, $1 \leq a \leq 6$, $1 \leq a \leq 5$, or $1 \leq a \leq 3$, and $1 \leq b \leq 8$, $1 \leq b \leq 5$, or $1 \leq b \leq 4$.

The compound of Formula 3 may be $SnO_2$, $CuO$, $SiO_2$, $GeO$, $Al_2O_3$, $ZnO_2$, or a combination thereof.

The first negative active material layer in the negative electrode-solid electrolyte sub-assembly according to an embodiment may be a composite of $Li_xSn_y$ and $Li_aN_b$; a composite of $Li_xSn_y$, $Sn_aN_b$, and $SnO_2$; a composite of Li, $Li_xSn_y$, and $Li_aN_b$; a composite of Li, $Li_xSn_y$, $Sn_aN_b$, and $SnO_2$; a composite of Li, $CuN_x$, and $LiN_y$; a composite of Li, Cu, $LiN_y$ or $Li_xCu_y$, and $Li_aN_b$; a mixture of $Li_xSn_y$ and $Li_aN_b$; a mixture of $Li_xSn_y$, $Sn_aN_b$, and $SnO_2$; a mixture of Li, $Li_xSn_y$, and $Li_aN_b$; a structure of Li, $Li_xSn_y$, $Sn_aN_b$, and $SnO_2$; a mixture of Li, $CuN_x$, and $LiN_y$; or a mixture of Li, Cu, $LiN_y$ or $Li_xCu_y$, and $Li_aN_b$.

Here, the term "structure" refers to a mixture, a composite, or a combination thereof. For example, the structure is a mixture.

The third metal material of the interlayer may be a mixture of a compound of Formula 4 and a compound of Formula 5, a composite of a compound of Formula 4 and a compound of Formula 5, or a combination thereof:

$$\text{Formula 4} \qquad Li_a\text{-}M3_b\text{-}O_c$$

wherein, in Formula 4, the third metal (M3) may be Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te and La, or a combination thereof, and

$$1 \leq a \leq 20, \ 1 \leq b \leq 10, \ \text{and} \ 1 \leq c \leq 10,$$

$$\text{Formula 5} \qquad M3_cO_d$$

wherein, in Formula 5, the third metal (M3) may be Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Bi, Ta, Hf, Au, Ba, V, Sr, Te and La, or a combination thereof, and

$$1 \leq c \leq 20 \text{ and } 1 \leq d \leq 30.$$

For example, in Formula 4, $1 \leq a \leq 10$, $1 \leq b \leq 8$, and $1 \leq c \leq 8$ or $1 \leq a \leq 9$, $1 \leq b \leq 3$, and $1 \leq c \leq 7$, and in Formula 5, $1 \leq c \leq 10$ and $1 \leq d \leq 28$ or $1 \leq c \leq 5$ and $1 \leq d \leq 25$.

The third metal material may be, for example, a composite of $Li_a\text{-}Sn_b\text{-}O_c$ (wherein $0 < a \leq 9$, $0 < b \leq 3$, and $0 < c \leq 7$) and $Sn_cO_d$ (wherein $0 < c \leq 3$ and $0 < d \leq 4$), a composite of $Li_a\text{-}Cu_b\text{-}O_c$ (wherein $0 < a \leq 9$, $0 < b \leq 3$, and $0 < c \leq 7$) and $Cu_cO_d$ (wherein $0 < c \leq 5$ and $0 < d \leq 24$), a mixture of $Li_a\text{-}Sn_b\text{-}O_c$ (wherein $0 < a \leq 9$, $0 < b \leq 3$, and $0 < c \leq 7$) and $Sn_cO_d$ (wherein $0 < c \leq 3$ and $0 < d \leq 4$), a mixture of $Li_a\text{-}Cu_b\text{-}O_c$ (wherein $0 < a \leq 9$, $0 < b \leq 3$, and $0 < c \leq 7$) and $Cu_cO_d$ (wherein $0 < c \leq 5$ and $0 < d \leq 24$), or a combination thereof. Here, the term "structure" refers to a mixture, a composite, or a combination thereof, for example, a mixture.

A volume of the first negative active material layer after charging the all-solid secondary battery may be 200 percent (%) or less of a volume of the first negative active material layer after discharging, for example, about 100 % to about 200 %, about 120 % to about 180 %, or about 140 % to about 160 %, of a volume of the first negative active material layer after discharging. An all-solid secondary battery having the first negative active material layer having such a volume change rate may have excellent cycle characteristics.

The second negative active material layer 24 may be between the negative electrode current collector and the first negative active material layer. The second negative active material layer 24 may be further added while assembling the battery. In an embodiment, the second negative active material layer 24 may be a precipitation layer formed after battery charging.

In an embodiment, the negative electrode current collector, the interlayer, the first negative active material layer, the second negative active material layer and a region between the negative electrode current collector, the interlayer, the first negative active material layer, and the second negative active material layer may be, according to a need, a lithium (Li)-free region that may not include lithium (Li) in an initial state or a state after discharge of the all-solid secondary battery.

The second negative active material layer may be formed as a precipitation layer or a deposition layer during charging, during disposing of the negative electrode current collector on the first negative active material layer, or during both of the charging and the disposing of the negative electrode current collector on the first negative active material layer of the all-solid secondary battery. The second negative active material layer may be a lithium metal layer or a lithium metal alloy layer.

The second negative active material layer may include a fourth metal (i.e., M4). The fourth metal may be a metal that may react with lithium to form an alloy or compound or a metal that may not react with lithium. The fourth metal may be an element of Groups 2 to 15. "Group" means a group of the Periodic Table of the Elements according to the International Union of Pure and Applied Chemistry ("IUPAC") Group 1-18 group classification system.

The fourth metal may include lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La), tungsten (W), tellurium (Te), a lithium alloy, or a combination thereof.

The lithium alloy may include silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La), tungsten (W), tellurium (Te), or a combination thereof.

In an embodiment, the second negative active material layer 24 may form a Li-M4 alloy due to a reaction between lithium precipitated by a reversible reaction of an all-solid secondary battery during a charging and discharging process and the fourth metal (M4). As a result, the second negative active material layer 24 may contain the Li-M4 alloy.

In particular, the second negative active material layer 24 may be a single metal layer of Ag or Sn or a lithium metal single layer before charging (that is, before precipitation by charging) or from an initial state.

When the second negative active material layer includes a lithium alloy such as Ag-Li, when assembling a battery, a silver layer may be formed, and lithium may be precipitated in the silver layer to thereby form the lithium alloy layer such as an Ag-Li layer during charging, during disposing of the negative electrode current collector on the first negative active material layer, or during both of the charging and the disposing of the negative electrode current collector on the first negative active material layer of the all-solid secondary battery. The disposing of the negative electrode current collector on the first negative active material layer may be, for example, bonding of the negative electrode current collector to the first negative active material layer.

When the second negative active material layer is formed as a single layer of the fourth metal such as a silver layer when assembling a battery, a thickness of the second negative active material layer may be in a range of, for example, about 20 nm to about 50 $\mu$m, about 20 nm to about 40 $\mu$m, 20 nm to about 1 $\mu$m, about 100 nm to about 1 $\mu$m, or about 300 nm to about 600 nm.

The thickness of the second negative active material layer may be, for example, about 20 $\mu$m to about 40 $\mu$m when the Li metal layer is used from the beginning of the assembling of the battery.

The first negative active material layer may reduce volume expansion during charging and discharging and may improve uniformity of lithium distribution.

The interfacial resistance between the interlayer 22 and the solid electrolyte 30 may be less than or equal to a certain level. For example, the interfacial resistance between the interlayer 22 and the solid electrolyte 30 may be less than or equal to 500 ohm· square centimeters (ohm·cm$^2$). For example, the interfacial resistance between the interlayer 22 and the solid electrolyte 30 may be less than or equal to 200 ohm·cm$^2$.

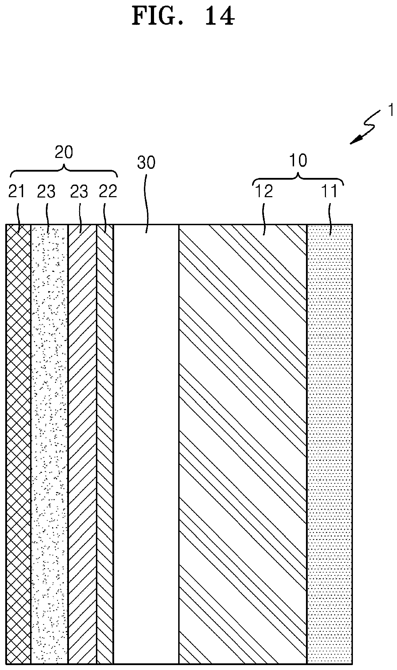

FIG. 14 is a schematic view illustrating an all-solid secondary battery 1 according to an embodiment.

As shown in FIG. 14, the all-solid secondary battery 1 may be a secondary battery including a solid electrolyte as an electrolyte.

The all-solid secondary battery 1 may include the positive electrode 10, the solid electrolyte 30, and the negative electrode 20.

Positive electrode

The positive electrode 10 may include a positive electrode current collector 11 and a positive active material layer 12.

Examples of the positive electrode current collector 11 include a plate or a foil including indium (In), copper (Cu), magnesium (Mg), stainless steel, titanium (Ti), iron (Fe) cobalt (Co), nickel (Ni), zinc (Zn), aluminum (Al), germanium (Ge), lithium (Li), or an alloy thereof.

The positive active material layer 12 may include, for example, a positive active material.

The positive active material may be any suitable positive active material capable of reversible intercalation and deintercalation of lithium ions. For example, the positive active material may be lithium transition metal oxide, such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate, nickel sulfide, copper sulfide, lithium sulfide, iron oxide, or vanadium oxide. But embodiments are not limited thereto. Any suitable positive active material available in the art may be used. The positive active material may be used alone or in combination of at least two thereof.

The positive active material may be, for example, a compound represented by one of the following formulae: $Li_aA_{1-b}B'_bD_2$, wherein $0.9 \leq a \leq 1$ and $0 \leq b \leq 0.5$; $Li_aE_{1-b}B'_bO_{2-c}D_c$, wherein $0.9 \leq a \leq 1$, $0 \leq b \leq 0.5$, and $0 \leq c \leq 0.05$; $LiE_{2-b}B'_bO_{4-c}D_c$, wherein $0 \leq b \leq 0.5$ and $0 \leq c \leq 0.05$; $Li_aNi_{1-b-c}Co_bB'_cD_\alpha$, wherein $0.9 \leq a \leq 1$, $0 \leq b \leq 0.5$, $0 \leq c \leq 0.05$, and $0 < \alpha \leq 2$; $Li_aNi_{1-b-c}Co_bB'_cO_{2-\alpha}F'_2$, wherein $0.9 \leq a \leq 1$, $0 \leq b \leq 0.5$, $0 \leq c \leq 0.05$, and $O < \alpha < 2$; $Li_aNi_{1-b-c}Co_bB'_cO_{2-\alpha}F'_2$, wherein $0.9 \leq a \leq 1$, $0 \leq b \leq 0.5$, $0 \leq c \leq 0.05$, and $O < \alpha < 2$; $Li_aNi_{1-b-c}Mn_bB'_cD_\alpha$, wherein $0.9 \leq a \leq 1$, $0 \leq b \leq 0.5$, $0 \leq c \leq 0.05$, and $0 < \alpha < 2$; $Li_aNi_{1-b-c}Mn_bB'_cO_{2-\alpha}F'_\alpha$, wherein $0.9 \leq a \leq 1$, $0 \leq b \leq 0.5$, $0 \leq c \leq 0.05$, and $O < \alpha < 2$; $Li_aNi_{1-b-c}Mn_bB'_cO_{2-\alpha}F'_2$, wherein $0.9 \leq a \leq 1$, $0 \leq b \leq 0.5$, $0 \leq c \leq 0.05$, and $O < \alpha < 2$; $Li_aNi_bE_cG_dO_2$, wherein $0.9 \leq a \leq 1$, $0 \leq b \leq 0.9$, and $0 \leq c \leq 0.5$, $0.001 \leq d \leq 0.1$; $Li_aNi_bCo_cMn_dGeO_2$, wherein $0.9 \leq a \leq 1$, $0 \leq b \leq 0.9$, $0 \leq c \leq 0.5$, $0 \leq d \leq 0.5$, and $0001 \leq e \leq 0.1$; $Li_aNiG_bO_2$, wherein $0.9 \leq a \leq 1$ and $0001 \leq b \leq 0.1$; $Li_aCoG_bO_2$, wherein $0.9 \leq a \leq 1$ and $0001 \leq b \leq 0.1$; $Li_aMnG_bO_2$, wherein $0.9 \leq a \leq 1$ and $0001 \leq b \leq 0.1$; $Li_aMn_2G_bO_4$, wherein $0.9 \leq a \leq 1$ and $0001 \leq b \leq 0.1$; $QO_2$; $QS_2$; $LiQS_2$; $V_2O_5$; $LiV_2O_5$; $LiI'O_2$; $LiNiVO_4$; $Li_{(3-f)}J_2(PO_4)_3$, wherein $0 \leq f \leq 2$; $Li_{(3-f)}Fe_2(PO_4)_3$, wherein $0 \leq f \leq 2$; $LiFePO_4$, or a combination thereof. In these compounds, A may be nickel (Ni), cobalt (Co), manganese (Mn), or a combination thereof; B' may be aluminum (Al), Ni, Co, Mn, chromium (Cr), iron (Fe), magnesium (Mg), strontium (Sr), vanadium (V), a rare-earth element, or a combination thereof; D may be oxygen (O), fluorine (F), sulfur (S), phosphorus (P), or a combination thereof; E may be Co, Mn, or a combination thereof; F' may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I' may be Cr, V, Fe, scandium (Sc), yttrium (Y), or a combination thereof; and J may be V, Cr, Mn, Co, Ni, copper (Cu), or a combination thereof. A compound added with a coating layer formed on one of these compounds may also be used, and a mixture of these compounds and a compound added with a coating layer may also be used. In an embodiment, the coating layer added on a surface of these compounds may include at least one compound of a coating element of oxide, hydroxide, oxyhydroxide, oxycarbonate, hydroxycarbonate of the coating element, or a combination thereof. In an embodiment, these compounds constituting the coating layer may be amorphous or crystalline. In an embodiment, the coating element included in the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. A method of forming a coating layer may be selected within a range of not affecting physical properties of the positive active material. The coating method may be, for example, a spray coating method or a dipping method. The detailed description of the coating method is omitted herein because the method is easily understood by one of ordinary skill in the art.

The positive active material may include, for example, a lithium salt of a transition metal oxide having a layered rock salt type structure in the lithium transition metal oxide. The term "layered rock salt type structure" as used herein refers to a structure in which an oxygen atom layer and a metal atom layer are alternately and regularly arranged in <111> direction of a cubic rock salt type structure and the respective atom layer thus form a two-dimensional plane. The term "cubic rock salt type structure" as used herein refers to a NaCl type structure as one of crystal structures in which face-centered cubic lattices respectively formed of anions and cations are shifted by only a half of the ridge of each unit lattice. Examples of the lithium transition metal oxide having a layered rock salt type structure may be a ternary lithium transition metal oxide represented by $LiNi_xCo_yAl_zO_2$ (NCA) or $LiNi_xCo_yMn_zO_2$ (NCM), wherein $0 < x < 1$, $0 < y < 1$, $0 < z < 1$, and $x+y+z=1$. When the positive active material includes the ternary lithium transition metal oxide having a layered rock salt type structure, the all-solid secondary battery 1 may have further improved energy density and thermal stability.

The positive active material may be covered by a covering layer as described above. The covering layer may be any suitable covering layer known as a covering layer of a positive active material in the all-solid secondary battery 1. Examples of the covering layer include $Li_2O-ZrO_2$.

For example, when the positive active material includes nickel (Ni) as a ternary lithium transition metal oxide such as NCA or NCM, the capacity density of the all-solid secondary battery 1 may be increased, thereby allowing a decrease in metal elution of a positive active material while charging. Consequently, the all-solid secondary battery 1 may have improved cycle characteristics.

The positive active material may be, for example, in a particle shape, such as a spherical shape or an oval-spherical shape. A particle diameter of the positive active material is not particularly limited. The diameter may be within a range applicable to a positive active material of the all-solid secondary battery 1 in the related art. A content of the positive active material of the positive electrode 10 is not particularly limited. The content may be within a range applicable to the positive electrode 10 of the all-solid secondary battery 1 in the related art.

The positive electrode 10 may further include additives, for example, a conductive agent, a binder, a filler, a dispersing agent, and an ion conductive agent, in addition to the positive active material. Examples of the conductive agent include graphite, carbon black, acetylene black, Ketjen black, carbon fibers, and metal powder. Examples of the binder may include, for example, styrene butadiene rubber (SBR), polytetrafluoroethylene, polyvinylidene fluoride, and polyethylene. Moreover, a filler, a dispersing agent, or an ion conductive agent that may be included in the positive electrode 10 may be any suitable material for an electrode in a solid secondary battery.

The positive electrode 10 may further include a solid electrolyte. The solid electrolyte included in the positive electrode 10 may be similar with or different from the solid electrolyte included in the solid electrolyte 30. The solid electrolyte will be described in detail with reference to the solid electrolyte 30.

The solid electrolyte included in the positive electrode 10 may be, for example, a sulfide-based (i.e., sulfide) solid electrolyte. The sulfide-based solid electrolyte may be the sulfide-based solid electrolyte used in the solid electrolyte 30.

In an embodiment, the positive electrode 10 may be, for example, impregnated in a liquid electrolyte. The liquid electrolyte may include a lithium salt, an ionic liquid, a polymeric ionic liquid, or a combination thereof. The liquid electrolyte may be nonvolatile. The term "ionic liquid" refers to a salt in a liquid state at room temperature or a room temperature molten salt having a melting point of room temperature or less and comprising ions. The ionic liquid may be at least one compound including a) a cation of an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, a triazolium cation, or a combination thereof, and b) an anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)2N^-$, $(C_2F_5SO_2)(CF_3SO_2)N^-$, $(CF_3SO_2)_2N^-$, or a combination thereof. For example, the ionic liquid may be N-methyl-N-propyl pyrrolidinium bis(trifluoromethanesulfonyl)imide, N-butyl-N-methyl pyrrolidinium bis(trifluoromethylsulfonyl)imide, 1-butyl-3-methylimidazolium bis(trifluoromethylsulfonyl)imide, 1-ethyl-3-methylimidazolium bis(trifluoromethylsulfonyl)imide, or a combination thereof. The polymer ionic liquid may include a repeating unit including a) a cation of an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, a triazolium cation, or a mixture thereof; and b) an anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^{2-}$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $CF_3SO_2)_2CH^-$, $(SF_5)_3C^-$, $(O(CF_3)_2C_2(CF_3)_2O)_2PO^-$, or a combination thereof. The lithium salt may be any suitable lithium salt available in the art. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are natural numbers), $LiCl$, $LiI$, or a combination thereof. The liquid electrolyte may include the lithium salt at a concentration in a range of about 0.1 molar (M) to about 5 M. A content of the liquid electrolyte impregnated in the positive electrode 10 may be in a range of about 0 part to about 100 parts by weight, about 0 part to about 50 parts by weight, about 0 part to about 30 parts by weight, about 0 part to about 20 parts by weight, about 0 part to about 10 parts by weight, or about 0 part to about 5 parts by weight, based on 100 parts by weight of the positive active material layer 12 not including a liquid electrolyte.

Solid electrolyte

The solid electrolyte layer 30 may be between the positive electrode 10 and the negative electrode 20.

The solid electrolyte may be an oxide-based solid electrolyte, a sulfide-based solid electrolyte, or a combination thereof. The solid electrolyte may be, for example, an oxide-based solid electrolyte. The oxide-based solid electrolyte may be $Li_{1+x+y}Al_xTi_{2-x}Si_yP_{3-y}O_{12}$ (wherein $0<x<2$ and $0\leq y<3$), $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al_pGa_{1-p})_x(Ti_qGe_{1-q})_{2-x}Si_yP_{3-y}O_{12}$ (wherein $0\leq x\leq1$, $0\leq y\leq1$, $0\leq p\leq1$, and $0\leq q\leq1$), $Li_xLa_yTiO_3$ (wherein $0<x<2$ and $0<y<3$), $Li_2O$, $LiOH$, $Li_2CO_3$, $LiAlO_2$, $Li_2O\text{-}Al_2O_3\text{-}SiO_2\text{-}P_2O_5\text{-}TiO_2\text{-}GeO_2$, $Li_{3+x}La_3M_2O_{12}$ (wherein $M$ = Te, Nb, or Zr, and x may be an integer from 1 to 10), or a combination thereof. The solid electrolyte may be prepared by sintering.

The oxide-based solid electrolyte may be, for example, a Garnet-type solid electrolyte.

A non-limiting example of the Garnet-type solid electrolyte may be an oxide represented by Formula 6:

$$\text{Formula 6} \qquad (Li_xM1_y)(M2)_{3-\delta}(M3)_{2-\omega}O_{12-x}X_z$$

wherein, in Formula 6, $3\leq x\leq8$, $0\leq y<2$, $-0.2\leq\delta\leq0.2$, $-0.2\leq\omega\leq0.2$, and $0\leq z\leq2$,
M1 may be a monovalent cation, a divalent cation, a trivalent cation, or a combination thereof,
M2 may be a monovalent cation, a divalent cation, a trivalent cation, or a combination thereof,
M3 may be a monovalent cation, a divalent cation, a trivalent cation, a tetravalent cation, a pentavalent cation, a hexavalent cation, or a combination thereof, and
X may be a monovalent anion, a divalent anion, a trivalent anion, or a combination thereof.

In Formula 1, for example, $6\leq x\leq8$.

In Formula 6, examples of the monovalent cation may include Na, K, Rb, Cs, H, and Fr, and examples of the divalent cation may include Mg, Ca, Ba, and Sr. Examples of the trivalent cation may include In, Sc, Cr, Au, B, Al, and Ga, and examples of the tetravalent cation may include Sn, Ti, Mn, Ir, Ru, Pd, Mo, Hf, Ge, V, and Si. Examples of the pentavalent cation may include Nb, Ta, Sb, V, and P.

M1 may be, for example, hydrogen (H), iron (Fe), gallium (Ga), aluminum (Al), boron (B), beryllium (Be), or a combination thereof. M2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof, and M3 may be zirconium (Zr), hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

In Formula 6, the monovalent anion represented by X may be a halogen, a pseudohalogen, or a combination thereof, the divalent anion represented by X may be $S^{2-}$ or $Se^{2-}$, and the trivalent anion represented by X may be, for example, $N^{3-}$.

In Formula 6, $3.5\leq x\leq8$, $4\leq x\leq8$, $4.5\leq x\leq8$, $5\leq x\leq8$, $6.6\leq x\leq8$, $6.7\leq x\leq7.5$, or $6.8\leq x\leq7.1$.

A non-limiting example of the Garnet-type solid electrolyte may be an oxide represented by Formula 7:

$$\text{Formula 7} \qquad (Li_xM1_y)(La_{a1}M2_{a2})_{3-\delta}(Zr_{b1}M3_{b2})_{2-\omega}O_{12-z}X_z$$

wherein, in Formula 7, M1 may be hydrogen (H), iron (Fe), gallium (Ga), aluminum (Al), boron (B), beryllium (Be), or a combination thereof,
M2 may be barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof,
M3 may be hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof,

$$3\leq x\leq8, \ 0\leq y<2, \ -0.2\leq\delta\leq0.2, \ -0.2\leq\omega\leq0.2, \ \text{and} \ 0\leq z\leq2$$

$$a1+a2=1, \ 0<a1\leq1, \ \text{and} \ 0\leq a2<1,$$

$$b1+b2=1, \ 0<b1<1, \ \text{and} \ 0\leq b2<1,$$

and
X may be a monovalent anion, a divalent anion, a trivalent anion, or a combination thereof.

In Formula 7, the monovalent anion represented by X may be a halogen, a pseudohalogen, or a combination thereof, the divalent anion represented by X may be $S^{2-}$ or $Se^{2-}$, and the trivalent anion represented by X may be, for example, $N^{3-}$.

In Formula 7, $4 \leq x \leq 8$, $4.5 \leq x \leq 8$, $5 \leq x \leq 8$, $5.5 \leq x \leq 8$, $6 \leq x \leq 8$, $6.6 \leq x \leq 8$, $6.7 \leq x \leq 7.5$, or $6.8 \leq x \leq 7.1$.

The term "pseudohalogen" as used herein refers to a molecule consisting of at least two electronegative atoms resembling halogens in a free state and generating anions similar to halide ions. Examples of pseudohalogens include cyanide, cyanate, thiocyanate, azide, or a combination thereof.

Examples of halogens include iodine (I), chlorine (Cl), bromine (Br), fluorine (F), or a combination thereof. Examples of pseudohalogens include cyanide, cyanate, thiocyanate, azide, or a combination thereof.

The trivalent anion may be, for example, $N^{3-}$.

In an embodiment, the Garnet-type solid electrolyte may be an oxide represented by Formula 8:

$$\text{Formula 8} \qquad Li_{3+x}La_3Zr_{2-a}M_aO_{12}$$

wherein, in Formula 8, M may be Al, Ga, In, Si, Ge, Sn, Sb, Bi, Sc, Y, Ti, Hf, V, Nb, Ta, W, or a combination thereof, wherein x may be an integer from 1 to 10, and $0 \leq a < 2$.

The Garnet-type solid electrolyte may be, for example, $Li_7La_3Zr_2O_{12}$ or $Li_{6.5}La_3Zr_{1.5}Ta_{0.5}O_{12}$.

In an embodiment, the solid electrolyte may be, for example, a sulfide-based solid electrolyte. The sulfide-based solid electrolyte may be, for example, $Li_2S-P_2S_5$, $Li_2S-P_2S_5-LiX$, wherein X is halogen, $Li_2S-P_2S_5-Li_2O$, $Li_2S-P_2S_5-Li_2O$-LiI, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, wherein m and n are positive integers, and Z is Ge, Zn, or Ga, $Li_2S-GeS_2$, $Li_2S-SiS_2-Li_3PO_4$, $Li_2S-SiS_2-Li_pMO_q$, wherein p and q are positive integers, and M is P, Si, Ge, B, Al, Ga, or In, $Li_{7-x}PS_{6-x}Cl_x$, wherein $0 \leq x \leq 2$, $Li_{7-x}PS_{6-x}Br_x$, wherein $0 \leq x \leq 2$, $Li_{7-x}PS_{6-x}I_x$, wherein $0 \leq x \leq 2$, or a combination thereof. The sulfide-based solid electrolyte may be prepared by performing a melt quenching method or a mechanical milling method on a start material, e.g., $Li_2S$ or $P_2S_5$. Subsequently, heat treatment may be performed thereon. The sulfide-based solid electrolyte may be an amorphous sulfide solid electrolyte, a crystalline sulfide solid electrolyte, or a mixture thereof.

In addition, the sulfide-based solid electrolyte may include, for example, at least sulfur (S), phosphorus (P), and lithium (Li), as constituting elements, of the sulfide-based solid electrolyte materials described above. For example, the sulfide-based solid electrolyte may be a material including $Li_2S-P_2S_5$. When a material including $Li_2S-P_2S_5$ is used as the sulfide-based solid electrolyte material, a mixing molar ratio of $Li_2S$ to $P_2S_5$ may be, for example, $Li_2S:P_2S_5=50:50$ to $90:10$.

The sulfide solid electrolyte may be an argyrodite-type compound including $Li_{7-x}PS_{6-x}Cl_x$, $0 \leq x \leq 2$, $Li_{7-x}PS_{6-x}Br_x$, $0 \leq x \leq 2$, $Li_{7-x}PS_{6-x}I_x$, $0 \leq x \leq 2$, or a combination thereof. The sulfide-based solid electrolyte included in the solid electrolyte may be an argyrodite-type compound including $Li_6PS_5Cl$, $Li_6PS_5Br$ $Li_6PS_5I$, or a combination thereof.

The solid electrolyte 30 may further include, for example, a binder. The binder included in the solid electrolyte 30 may be, for example, styrene butadiene rubber (SBR), polytetrafluoroethylene, polyvinylidene fluoride, or polyethylene. But embodiments are not limited thereto. Any suitable binder available in the art may be used. The binder of the solid electrolyte 30 may be identical to or different from the binder of the positive active material layer 12 and the binder of the negative active material layer 22.

Negative electrode

As shown in FIG. 14, the negative electrode 20 may include the negative electrode current collector 21, the second negative active material layer 24, the first negative active material layer 23, and the interlayer 22.

For example, the negative electrode current collector 21 may include materials that are not reactive to lithium and do not form an alloy or a compound with lithium. Materials of the negative electrode current collector 21 may include, for example, copper (Cu), stainless steel, titanium (Ti), iron (Fe), cobalt (Co), and nickel (Ni). But embodiments are not limited thereto. Any suitable electrode current collector available in the art may be used. The negative electrode current collector 21 may include one type of the metal described above, or an alloy of at least two metals or a coating material. The negative electrode current collector 21 may be, for example, in a plate shape or a foil shape.

As shown in FIG. 14, in the all-solid secondary battery 1 according to an embodiment, the second negative active material layer 24 may be between the negative electrode current collector 21 and the first negative active material layer 23.

The second negative active material layer 24 may be between the negative electrode current collector 21 and the first negative active material layer 23 and may include lithium metal or lithium alloy.

Examples of the lithium alloy may include a Li-Ag alloy, a Li-Au alloy, a Li-Al alloy, a Li-Sn alloy, a Li-In alloy, a Li-Zn alloy, a Li-Ge alloy, or a Li-Si alloy, but embodiments are not limited thereto.

The second negative active material layer 24 may be prepared while assembling the battery or may be formed as a precipitation layer after charging the battery not including the second negative active material layer while assembling the battery.

As described above, the second negative active material layer 24 includes one metal, two or more metal composites, or metal alloys, which may form an alloy phase with lithium, without including lithium metal, lithium alloy, or lithium. Examples of the second negative active material layer 24 include Ag, Sn, Sn-Si alloy, an Ag-Sn alloy, a combination thereof, or a combination of lithium and the foregoing metal.

The lithium metal may include lithium, and the lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy, but embodiments are not limited thereto. Any suitable lithium alloy available in the art used as a lithium alloy may be used.

The second negative active material layer 24 may comprise one of the alloys, lithium metal, or several types of alloys.

The interlayer 22 may form an interface with superior adhesion to the solid electrolyte, as compared with the first negative active material layer.

In particular, the interlayer 22 may contain the third metal material, and the third metal material has excellent adhesion to oxide-based solid electrolytes and may not act as a resistance element to the movement of lithium ions.

The third metal (M3) of the interlayer 22 may contain the same metal as the first negative active material layer 23. A method of preparing the all-solid secondary battery 1 may comprise: providing the positive electrode; disposing the solid electrolyte on the positive electrode; disposing the interlayer on a first surface of the solid electrolyte opposite a second surface of the solid electrolyte on which the positive electrode is disposed; disposing the first negative active material layer on the interlayer and opposite the solid electrolyte; and disposing the negative electrode current collector on the first negative active material layer opposite the interlayer, to prepare the all-solid secondary battery, wherein the first negative active material layer may include a mixture of a compound of Formula 1 and a compound of Formula 2, a composite of the compound of Formula 1 and the compound of Formula 2, or a combination thereof,

$$\text{Formula 1} \qquad \text{Li}_x\text{M1}_y$$

wherein, in Formula 1, a first metal (M1) may be an element capable of forming a compound or an alloy with lithium and oxygen, and

$$0 \leq x \leq 20 \text{ and } 1 \leq y \leq 10,$$

$$\text{Formula 2} \qquad \text{M2}_a\text{N}_b$$

wherein, in Formula 2, a second metal (M2) may be lithium, an element capable of forming a compound or an alloy with lithium and nitrogen, or a combination thereof, and

$$1 \leq a \leq 15 \text{ and } 1 \leq b \leq 10.$$

The disposing of the interlayer and the first negative active material layer, wherein the interlayer and the first negative active material layer may be formed simultaneously by one process, may include: depositing the first metal on the solid electrolyte in a nitrogen atmosphere to form a first layer including a first metal nitride layer, and contacting the first layer with lithium, charging the all-solid secondary battery to supply lithium to the first layer, heat-treating the first layer, or a combination thereof, to simultaneously form the interlayer and the first negative active material layer.

In this specification, the meaning of "using the first layer" should be interpreted as including all cases where i) the first layer is in contact with lithium stacked on top of the first layer, ii) lithium is supplied to the first layer after charging, or iii) the first layer is heat-treated (for example, at 100 °C for about 10 minutes).

When the first negative active material layer further includes an oxide such as the compound of Formula 3, the first metal may be deposited on top of the solid electrolyte in a nitrogen and oxygen mixed atmosphere to form the first layer containing the structure of the first metal nitride and the oxide. Here, the structure of the first metal nitride and the oxide is, for example, the mixture of the first metal nitride and the oxide, the composite of the first metal nitride and the oxide composite, or a combination. For example, the structure of the first metal nitride and the oxide is, the composite of the first metal nitride and the oxide.

The disposing of the interlayer and the first negative active material may include forming the interlayer on the solid electrolyte and forming the first negative active material layer on top of the interlayer opposite the solid electrolyte.

The disposing of the interlayer and the first negative active material layer may include: disposing the first metal on the solid electrolyte in an oxygen atmosphere to form a second layer including a first metal oxide layer and to form the interlayer therefrom; and depositing the first metal on the second layer in a nitrogen atmosphere to form the first layer including the first metal nitride layer and to form the first negative active material layer therefrom.

In this specification, the meaning of "using the second layer" should be interpreted as including all cases where i) lithium is supplied to the second layer after charging, ii) the second layer is in contact with lithium, or iii) the second layer is heat-treated (for example, at 100 °C for about 10 minutes). During charging of the all-solid secondary battery, the second metal in the first negative active material layer may form an alloy with lithium.

A second negative active material layer may be further included between the negative electrode current collector and the first negative active material layer.

The second negative active material layer may include a fourth metal, and the fourth metal may include lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La), tungsten (W), tellurium (Te), a lithium alloy, or a combination thereof, wherein the fourth metal is an element of Groups 2 to 15.The fourth metal may include silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La), tungsten (W), tellurium (Te), or a combination thereof.

The second negative active material layer may be formed as a precipitation layer during charging, during disposing of the negative electrode current collector on the first negative active material layer, or during both of the charging and the disposing of the negative electrode current collector on the first negative active material layer of the all-solid secondary battery, and the second negative active material layer may be lithium metal, lithium alloy, or a combination thereof.

The fourth metal may include: lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La), tungsten (W), tellurium (Te), or a combination thereof; and the lithium alloy, such as a combination of lithium with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La) tungsten (W), tellurium (Te), or a combination thereof.

The first metal oxide may be, for example, tin oxide, silver oxide, zinc oxide, silicon oxide, germanium oxide, tellurium oxide, aluminum oxide, gallium oxide, bismuth oxide, antimony oxide, and the like.

The first metal nitride may be, for example, tin nitride, silver nitride, zinc nitride, silicon nitride, germanium nitride, tellurium nitride, aluminum nitride, gallium nitride, bismuth nitride, antimony nitride, or a combination thereof.

During charging, during disposing of the negative electrode current collector on the first negative active material layer, or during disposing of the second negative active material layer, or during both of charging and disposing of the negative electrode current collector on the first negative active material layer or the second negative active material layer, the first metal of the first negative active material layer may form an alloy with lithium.

Disposing, e.g., bonding, of the second negative active material layer on the first negative active material layer through pressurization may also be included. During the pressurization, a portion of lithium included in the second negative active material layer may be injected into the first negative active material layer.

The second negative active material layer may be a lithium precipitation layer that may prevent direct contact between the solid electrolyte and lithium metal by inducing lithium metal to precipitate on the negative electrode current collector 21.

The second negative active material layer may be lithium metal or the third metal coated on the negative electrode current collector 21. In an embodiment, the second negative active material layer may be lithium metal precipitated while charging or a lithium alloy layer. During charging of a battery, lithium precipitation may increase a volume and a thickness of the second negative active material layer. In addition, the third metal may form a Li-M3 alloy through a reversible reaction during a charging and discharging process of an all-solid secondary battery. During charging, during assembling (e.g., disposing or bonding aforementioned layer on another layer or bonding an aforementioned layer to another layer), or during both of the charging and discharging and the assembling of the all-solid secondary battery, a second negative active material layer may be formed as a precipitation layer or as a deposition layer, and the second negative active material layer may be a lithium metal layer or a lithium metal alloy layer.

During charging, during assembling, or during both of the charging and discharging and the assembling of the all-solid secondary battery, the fourth metal in the second negative active material layer may form an alloy with lithium.

Disposing, e.g., bonding, the second negative active material layer on the first negative active material layer, the interlayer, and the electrolyte assembly through pressurization may also be included. During the pressurization, a portion of lithium included in the second negative active material layer may be injected into the interlayer or the first negative active material layer.

The disposing (e.g., bonding) may a pressurizing compression process. During the pressurization, a portion of lithium included in the second negative active material layer may be injected into the first negative active material layer and/or the interlayer.

According to an embodiment, the third negative active material layer may be formed as a precipitation layer during charging, during assembling, or during both of the charging and discharging and the assembling of the all-solid secondary battery. The second negative active material layer may be a lithium metal layer or a lithium metal alloy layer. A thickness of the second negative active material layer may be, for example, 1 $\mu$m or greater, 5 $\mu$m or greater, 10 $\mu$m or greater, about 10 $\mu$m to about 1,000 $\mu$m, about 10 $\mu$m to about 500 $\mu$m, about 10 $\mu$m to about 200 $\mu$m, about 10 $\mu$m to about 100 $\mu$m, or about 10 $\mu$m to about 50 $\mu$m.

Preparation of positive electrode

First, materials, such as a positive active material, a binder, constituting the positive active material layer may be added to a nonpolar solvent to thereby prepare a slurry. The prepared slurry may be coated on the positive electrode current collector 11, followed by drying. The resulting laminate may be pressurized to prepare the positive electrode 10. The pressurizing may be performed by, for example, roll pressing, flat pressing, pressing using hydrostatic pressure, but embodiments are not limited thereto. Any suitable pressurizing available in the art may be used. The pressurization may be omitted. A mixture of materials constituting the cathode active material layer 12 may be compressed to mold the cathode 10 in a pellet shape or in a sheet shape. When the positive electrode 10 is prepared as above, the positive electrode current collector 11 may be omitted. In an embodiment, the positive electrode 10 may be impregnated in an electrolyte to be used.

Preparation of solid electrolyte

The solid electrolyte 30 including an oxide-based solid electrolyte may be, for example, prepared by heat-treating a precursor of an oxide-based solid electrolyte material.

The oxide-based solid electrolyte may be prepared by contacting the precursor in a stoichiometric amount to form a mixture, and then heat-treating the mixture. The contacting may include milling or grinding, for example, ball milling. A mixture of precursors mixed with a stoichiometric composition may be subjected to primary heat treatment in an oxidizing atmosphere to prepare a primary heat treatment resulting product. The primary heat treatment may be performed for about 1 hour to about 36 hours at a temperature range of about 1,000 °C or less. The primary heat treatment resulting product may be ground. The grinding of primary heat treatment resulting product may be carried out either in a dry method or in a wet method. The wet grinding may be, for example, performed by mixing a solvent such as methanol and the resulting product of the primary heat treatment, and then milling with a ball mill for about 0.5 hours to about 10 hours. The dry grinding may be performed by milling with a ball mill without a solvent. A diameter of the ground primary heat treatment resulting product may be in a range of about 0.1 $\mu$m to about 10 $\mu$m or about 0.1 $\mu$m to about 5 $\mu$m. The ground primary heat treatment resulting product may be dried. The ground resulting product of the primary heat treatment may be mixed with a binder solution and molded into pellets or simply pressed at a pressure in a range of about 1 ton to about 10 tons and molded into pellets.

The molding resultant may be subjected to secondary heat treatment at a temperature of about 1,500 °C or less for about 1 hour to about 36 hours. The sintered product, the solid electrolyte 30, may be obtained by the secondary heat treatment. The secondary heat treatment may be performed, for example, at about 500 °C to about 1,300 °C, about 550 °C to about 1,200 °C, or about 550 °C to about 1,000 °C. The secondary heat treatment may be performed for about 1 hour to about 36 hours. To obtain a sintered product, the secondary heat treatment temperature is greater than the primary heat treatment temperature. For example, the secondary heat treatment temperature may be greater than the primary heat treatment temperature by about 10 °C or greater, about 20 °C or greater, about 30 °C or greater, or about 50 °C or greater. The molding resultant may be subjected to secondary heat treatment in at least one of an oxidizing atmosphere and a reducing atmosphere. The secondary heat treatment may be performed in a) an oxidizing atmosphere, b) a reducing atmosphere, or c) an oxidizing atmosphere and a reducing atmosphere.

The solid electrolyte 30 including a sulfide-based solid electrolyte may be prepared, for example, by using a solid electrolyte formed of a sulfide-based solid electrolyte material.

With regard to the sulfide-based solid electrolyte, the starting material may be treated by, for example, a melt quenching method or a mechanical milling method, but embodiments are not necessarily limited thereto. Any suitable method available in the art as a method of preparing a sulfide-based solid electrolyte may be used. For example, when the melt quenching method is used, first, $Li_2S$, and $P_2S_5$ may be mixed in a given ratio, and the mixture is compressed into pellets. The pellets may then be treated at a given reaction temperature in vacuum and quenched to prepare a sulfide-based solid electrolyte material. In this regard, a reaction temperature of the mixture of $Li_2S$ and $P_2S_5$ may be in a range of about 400 °C to about 1,000 °C, for example, in a range of about 800 °C to about 900 °C. The reaction time may be, for example, about 0.1 hour to about 12 hours, or about 1 hour to about 12 hours. In addition, a temperature during the quenching of the reactant may be about 10 °C or less, for example, about 0 °C or less, and a quenching rate may be in a range of about 1 °C/second (sec) to about 10,000 °C/sec, for example, about 1 °C/sec to about 1,000 °C/sec. For example, when the mechanical milling method is used, a sulfide-based solid electrolyte material may be prepared by stirring and reacting a starting material such as $Li_2S$ or $P_2S_5$ using a ball mill. Although the stirring rate and duration of the mechanical milling method are not particularly limited, as the stirring rate increases, a rate of production of the sulfide-based solid electrolyte material may increase, and as the stirring duration increases, a conversion rate of raw materials into the sulfide-based solid electrolyte material may increase. Then, mixed raw materials prepared by the melt quenching method or the mechanical milling method may be thermally treated at a given temperature and ground to prepare the solid electrolyte in particle form. In a case where the solid electrolyte has glass transition properties, the solid electrolyte may be crystalline due to heat treatment.

The thus produced solid electrolyte may be used to form the solid electrolyte 30 by any suitable method for layer formation, such as deposition, aerosol deposition, cold spraying, or sputtering. Further, the solid electrolyte 30 may be prepared by pressurizing a solid electrolyte particle. In addition, the solid electrolyte 30 may be prepared by mixing a solid electrolyte, a solvent, and a binder followed by coating, drying, and pressurizing.

Preparation of all-solid secondary battery

An assembly of the negative electrode 20 and the solid electrolyte 30, and the positive electrode 10, may be prepared, and then, the solid electrolyte 30 may be placed between the positive electrode 10 and the negative electrode 20, followed by pressurization, thereby completing the manufacture of an all-solid secondary battery 1.

The pressurization may be, for example, roll pressing, uni-axial pressing, flat pressing, warm isotactic pressing (WIP), cold isostatic pressing (CIP), but is not necessarily limited thereto. Any suitable pressurization method available in the art may be used. The pressure applied during the pressurization may be, for example, about 50 megaPascals (MPa) to about 750 MPa. The time for the pressure to be applied may be in a range of about 5 milliseconds (ms) to about 5 minutes (min). The pressurizing may be performed at, for example, room temperature to a temperature 90 °C or less, or at about 20 °C to about 90 °C. In an embodiment, the pressurizing may be performed at a high temperature of 100 °C or greater.

Next, the positive electrode 10 may be placed on the other surface of the solid electrolyte 30 opposite to the surface on which the negative electrode 20 is bonded, and pressurized with a given pressure to dispose, e.g., to bond, the positive electrode layer 10 to the other surface of the solid electrolyte layer 30. In an embodiment, when the positive electrode 10 is impregnated with a liquid electrolyte, a battery may be manufactured by laminating without pressure.

The pressurization may be, for example, roll pressing, uni-axial pressing, flat pressing, warm isotactic pressing (WIP), cold isotactic pressing (CIP), but is not necessarily limited thereto. Any suitable pressurization method available in the art may be used. The pressure applied during the pressurization may be, for example, about 50 MPa to about 750 MPa. The time for the pressure to be applied may be in a range of about 5 ms to about 5 min. The pressurization may be performed at, for example, room temperature to a temperature 90 °C or less, or at about 20 °C to about 90 °C. In an embodiment, the pressurization may be performed at a high temperature of 100 °C or greater.

According to another embodiment, an all-solid secondary battery may include a positive electrode and the negative electrode-solid electrolyte sub-assembly disposed on the positive electrode, and wherein the solid electrolyte may be located between the positive electrode and the negative electrode.

The positive electrode may contain a liquid electrolyte.

The negative electrode-solid electrolyte sub-assembly according to an embodiment may include: a negative electrode current collector; a first negative active material layer disposed on the negative electrode current collector; an interlayer disposed on the first negative active material layer and opposite the negative electrode current collector, and a solid electrolyte disposed on the interlayer and opposite the first negative active material layer,

wherein the first negative active material layer may include a mixture of a compound of Formula 1 and a compound of Formula 2, a composite of the compound of Formula 1 and the compound of Formula 2, or a combination thereof:

Formula 1          $Li_xM1_y$

wherein, in Formula 1, a first metal (M1) may be an element capable of forming a compound or an alloy with lithium and oxygen, and

$$0 \leq x \leq 20 \text{ and } 1 \leq y \leq 10,$$

Formula 2          $M2_aN_b$

wherein, in Formula 2, a second metal (M2) may be lithium, an element capable of forming a compound or an alloy with lithium and nitrogen, or a combination thereof, and

$$1 \leq x \leq 15 \text{ and } 1 \leq b \leq 10,$$

wherein the interlayer comprises a third metal material, and
the third metal material comprises a third metal oxide, an oxide comprising a third metal and lithium, lithium oxide, or a combination thereof, wherein the third metal is an element of Groups 2 to 15.

The configuration and method of manufacturing the all-solid secondary battery 1 described above are example embodiments, and the elements and the manufacturing procedure may be appropriately changed. The pressurization may be omitted.

Hereinafter the inventive concept will be described in detail with reference to Examples and Comparative Examples. These examples are for illustrative purposes only and are not intended to limit the scope of the inventive concept.

EXAMPLES

Example 1: Negative electrode with structure of LCO (3.2 milliampere-hours per square centimeter (mAh/cm$^2$))/LLZTO/ composite of $Li_aSn_bO_c+Sn_aO_b$/mixture of $Li_xSn_y$ (where $0<x \leq 5$ and $y=1$)+ $Li_aN_b$ (where $0<a<6$ and $b=1$)/Li metal

Preparation of laminate of solid electrolyte/negative electrode

LLZTO ($Li_{6.5}La_3Zr_{1.5}Ta_{0.5}O_{12}$) pellets having a thickness of 350 $\mu$m were prepared as a solid electrolyte.

Sn was deposited on the solid electrolyte in nitrogen atmosphere at a temperature of 25 °C to form a $Sn_3N_4$ layer having a thickness of about 110 nm. Then, the $Sn_3N_4$ layer was dipped in 0.1 M HCl aqueous solution for 10 seconds. Then, the resultant dipped in HCl was dried at a temperature of 25 °C to sequentially form a pre-interlayer, i.e., an Sn-Ox (where $0<x \leq 6$) composite layer, on the solid electrolyte, and a pre-first negative active material layer, i.e., an Sn-Nx (wherein $0<x \leq 6$) composite layer, thereby preparing a laminate of solid electrolyte/pre-interlayer/pre-first negative active material layer.

A second negative active material layer, in which a copper (Cu) foil that is a negative electrode current collector having a thickness of 10 $\mu$m was coated with lithium (Li) metal having a thickness of thickness 20 $\mu$m, was stacked on the laminate of solid electrolyte/pre-interlayer/pre-first negative active material layer. Then, a pressure of 100 MPa was applied thereto at a temperature of 25 °C by cold isotactic pressing (CIP) to thereby prepare a negative electrode-solid electrolyte sub-assembly having a stacked structure of solid electrolyte/interlayer/first negative active material layer/second negative active material layer/negative electrode current collector.

Preparation of positive electrode

LiCoO$_2$ (LCO) was prepared as a positive active material. In addition, polytetrafluoroethylene (DuPont $^{TM}$Teflon binder) was prepared as a binder. The binder was used in a form of a solution, dissolved in N-Methyl-2-pyrrolidone (NMP) at a ratio of 5 % by weight. In addition, Denka Black (DB) was prepared as a conductive aid.

Then, these materials were mixed in a weight ratio of positive active material:conductive aid:binder=100:2:1 to prepare a slurry-type mixture. The slurry-type mixture was coated on a positive electrode current collector comprising 18 $\mu$m-thick aluminum foil, the coated positive electrode current collector was dried at 120 °C for 12 hours, and compressed to produce a positive electrode.

The positive active material layer of the prepared positive electrode was impregnated in an electrolytic solution of an ionic liquid of N-propyl-N-methyl-pyrrolidinium bis(fluorosulfonyl)imide (PYR13FSI) dissolving 2.0 M of Lithium bis(trifluoromethanesulfonyl)imide (LiFSI).

Preparation of all-solid secondary battery

The positive electrode was placed such that the positive active material layer impregnated in the electrolytic solution containing the ionic liquid in a stainless steel (SUS) cap faced the top. An all-solid secondary battery was manufactured by placing a laminate of solid electrolyte/negative electrode with a negative electrode attached to the laminate such that the solid electrolyte was disposed on the positive active material layer and by sealing the structure. The positive electrode and the negative electrode were insulated with an insulator. A part of the positive electrode current collector and a part of the negative electrode current collector were protruded to the outside of the sealed battery and used as a positive electrode terminal and a negative electrode terminal, respectively.

When charging the thus obtained all-solid secondary battery, the interlayer included a composite containing $Li_aSn_bO_c$ (where $0<a\leq9$, $0<b\leq3$, and $0<c\leq7$) and $Sn_aO_b$ (where $0<a\leq3$ and $O<\leq\geq4$). An example of $Li_aSn_bO_c$ ($0<a\leq9$, $0<b\leq3$, $0<c\leq7$) was $Li_2SnO_3$, and an example of $Sn_aO_b$ ($0<a\leq3$, $0<b\leq4$) was $SnO_2$. A thickness of the interlayer was about 15 nm.

The first negative active material layer included a composite of $Li_xSn_y$ (where $0<x\leq5$ and $y=1$) and $Li_aN_b$ (where $0<a<6$ and $b=1$), and a thickness of the first negative active material layer was about 100 nm. In the composite of $Li_xSn_y$ (where $0<x\leq5$ and $y=1$) and $Li_aN_b$ (where $0<a<6$ and $b=1$), an example of $Li_xSn_y$ was $Li_3Sn$, an example of $Li_aN_b$ is $Li_3N$.

The compositions of the first negative active material layer and interlayer were identified by using XPS analysis.

As a result of XPS analysis of the composite containing LiaSnbOc ($0<a\leq9$, $0<b\leq3$, $0<c\leq7$) and SnaOb ($0<a\leq3$, $0<b\leq4$), the Sn 3d peak appears at the binding energy of 485 to 490 eV. The Sn 3d peak of the XPS analysis of the composite showed a shift toward higher binding energy compared to the results of the XPS analysis of the mixture of LiaSnbOc and SnOb.

As a result of XPS analysis of the composite containing LixSny ($0<x\leq5$, $y=1$) and LiaNb ($0<a<6$, $b=1$), a Sn 3d peak appears at a binding energy of 485 to 490 eV. The Sn 3d peak of the XPS analysis of the composite showed a shift toward high binding energy compared to the results of the XPS analysis of the mixture of LixSny and LiaNb.

Example 2: Negative electrode with structure of LCO (3.2 mAh/cm²)/LLZTO/ Li-Cu-O+CuOx composite layer (composite of $Li_aCu_bO_c$ and $Cu_aO_b$)/Li + $Cu_3N$ + $Li_3N$/Li metal

An all-solid secondary battery was manufactured in the same manner as in Example 1, except that a laminate of solid electrolyte/pre-interlayer/pre-first negative active material layer was prepared as follows.

Copper was deposited on the solid electrolyte by using an RF sputter in an oxygen atmosphere at a temperature of 25 °C to form a pre-interlayer, i.e., a CuOx (where $0<x<3$) layer, having a thickness of about 10 nm to prepare a solid electrolyte/pre-interlayer. Subsequently, copper was deposited on the resultant structure in nitrogen atmosphere at a temperature of 25 °C to form $Cu_3N$ was performed to thereby prepare a laminate of solid electrolyte/pre-interlayer/pre-first negative active material layer.

When charging the all-solid secondary battery prepared in Example 2, the first negative active material layer contained a composite of Li, Cu, $Cu_3N$, and $Li_3N$, and the interlayer contained a composite of $Li_aCu_bO_c$ (where $0<a\leq9$, $0<b\leq3$, and $0<c\leq7$) and $Cu_aO_b$ (where $0<a\leq5$ and $0<b\leq24$). Here, the structure was the mixture, the composite or a combination thereof. For example, the structure was the mixture. The thickness of the intermediate layer prepared in Example 2 was about 15 nm, and the thickness of the first negative electrode active material layer was about 100 nm.

Example 3: LCO (3.2 mAh/cm²)/LLZTO/composite of $Li_aSn_bO_c$ (where $0<a\leq9$, $0<b\leq3$, and $0<c\leq7$) and $Sn_aO_b$ (where $0<a\leq3$ and $0<b\leq4$)/ composite of $Li_xSn_y$ (where $0<x\leq5$ and $y=1$), $Sn_aN_b$ (where $0<a\leq3$ and $0<b\leq4$, e.g., $Sn_3N_4$), and $Sn_aO_b$ ($0<a\leq3$, $0<b\leq4$, e.g., $SnO_2$)/Li metal

An all-solid secondary battery was manufactured in the same manner as in Example 1, except that a laminate of solid electrolyte/pre-interlayer/pre-first negative active material layer was prepared as follows.

Sn was deposited on the solid electrolyte in oxygen atmosphere at a temperature of 25 °C to form a pre-interlayer, i.e., SnOx (where $0<x<6$), having a thickness of about 10 nm. Then, in a mixed gas atmosphere of oxygen and nitrogen, Sn was deposited to a thickness of 100 nm to sequentially form a pre-first negative active material layer, i.e., an Sn-O-N composite layer, thereby preparing a laminate of solid electrolyte/pre-interlayer/pre-first negative active material layer.

A second negative active material layer, in which a copper (Cu) foil that is a negative electrode current collector having a thickness of 10 μm was coated with lithium (Li) metal having a thickness of thickness 20 μm, was stacked on the laminate of solid electrolyte layer/pre-interlayer/pre-first negative active material layer. Then, a pressure of 100 MPa was applied thereto at a temperature of 25 °C by CIP to thereby prepare a negative electrode-solid electrolyte sub-assembly having a stacked structure of solid electrolyte/interlayer/first negative active material layer/second negative active material layer/negative electrode current collector.

Example 4: LCO (3.2 milliampere-hours per square centimeter (mAh/cm²))/LLZTO/composite of $Li_aSn_bO_c+Sn_aO_b$/composite of $Li_xSn_y$ (where $0<x\leq5$ and $y=1$)+ $Li_aN_b$ (where $0<a<6$ and $b=1$)/Li metal

A negative electrode-solid electrolyte sub-assembly was prepared in the same manner as in Example 1, except that the laminate of solid electrolyte/negative electrode was prepared according to the following procedure.

LLZTO ($Li_{6.5}La_3Zr_{1.5}Ta_{0.5}O_{12}$) pellets having a thickness of 350 μm were prepared as a solid electrolyte.

Sn was deposited on the solid electrolyte in oxygen atmosphere at a temperature of 25 °, and then Sn was deposited on the solid electrolyte in nitrogen atmosphere at a temperature of 25 °,C. Then, the resultant structure was dipped in 0.1 M HCl aqueous solution for 10 seconds. Then, the resultant dipped in HCl was dried at a temperature of 25 °C to sequentially form a pre-interlayer, i.e., an $Sn-Ox$ (where $0<x\leq6$) composite layer, on the solid electrolyte, and a pre-first negative active material layer, i.e., an $Sn-Nx$ (wherein $0<x\leq6$) composite layer, thereby preparing a laminate of solid electrolyte/pre-interlayer/pre-first negative active material layer.

A second negative active material layer, in which a copper (Cu) foil that is a negative electrode current collector having a thickness of 10 $\mu$m was coated with lithium (Li) metal having a thickness of thickness 20 $\mu$m, was stacked on the laminate of solid electrolyte/pre-interlayer/pre-first negative active material layer. Then, a pressure of 100 MPa was applied thereto at a temperature of 25 °C by cold isostatic pressing (CIP) to thereby prepare a negative electrode-solid electrolyte sub-assembly having a stacked structure of solid electrolyte/interlayer/first negative active material layer/second negative active material layer/negative electrode current collector.

Comparative Example 1: LCO (3.2 mAh/cm$^2$)/LLZTO/ Li-Sn-O+LiSn composite layer/Li metal

An all-solid secondary battery was manufactured in the same manner as in Example 1, except that a laminate of solid electrolyte/ negative electrode sub-assembly was prepared as follows.

Sn was deposited on the solid electrolyte by RF sputtering in oxygen atmosphere at a temperature of 25 °C to form an Sn layer to thereby prepare a laminate of solid electrolyte/Sn layer.

A second negative active material layer, in which a copper (Cu) foil that is a negative electrode current collector having a thickness of 10 $\mu$m coated with lithium (Li) metal having a thickness of thickness 20 $\mu$m, was stacked on the laminate of solid electrolyte/pre-interlayer. Then, a pressure of 100 MPa was applied thereto at a temperature of 25 °C by CIP to thereby preparing a negative electrode-solid electrolyte sub-assembly having a stacked structure of solid electrolyte layer/interlayer/second negative active material layer/negative electrode current collector.

After the all-solid secondary battery prepared according to Comparative Example 1 was charged and discharged, the interlayer having a thickness of about 500 nm contained a Li-Sn-O and LiSn.

When preparation is carried out according to Comparative Example 1, the thickness of the interlayer was increased. As seen from the results of the Evaluation Examples, the resistance increased, and high-rate characteristics decreased because the first negative active material layer did not exist.

Comparative Example 2: LCO (3.2 mAh/cm$^2$)/LLZTO/ Li-Sn-O+SnOx composite layer/Li metal

An all-solid secondary battery was manufactured in the same manner as in Comparative Example 1, except that the interlayer including a Li-Sn-O and LiSn was formed to have a thickness of about 15 nm.

In the all-solid secondary battery prepared in Comparative Example 2, a first negative active material layer was not included. Thus, as shown in the results of the Evaluation Examples, rate capability was deteriorated.

Comparative Example 3: LCO (3.2 mAh/cm$^2$)/LLZTO/ LiZn$_x$ (where $0<x\leq3$) +LiyO (where $0<y\leq2$) composite layer/Li metal

An all-solid secondary battery was manufactured in the same manner as in Comparative Example 1, except that a laminate of solid electrolyte/pre-interlayer was prepared as follows.

Zn was deposited on the solid electrolyte by RF sputtering in argon atmosphere at a temperature of 25 °C to form an Zn layer having a thickness of about 50nm to thereby prepare a laminate of solid electrolyte/Zn layer.

After the all-solid secondary battery prepared according to Comparative Example 3 was charged and discharged, the interlayer having a thickness of about 100 nm contained a LiZn$_x$ (where $0<x\leq3$) and LiyO (where $0<y\leq2$).

According to Comparative Example 3, a negative active material (LiZnx, $0<x\leq3$) was present in the interlayer. Accordingly, electronic conduction was generated, thus causing short circuit.

Comparative Example 4: Negative electrode with structure of LCO (3.2 mAh/cm$^2$)/LLZTO/Te+LiTe$_x$ (where $0<x\leq3$) +LiyO (where $O<y\leq2$) layer/Li metal

An all-solid secondary battery was manufactured in the same manner as in Comparative Example 1, except that a laminate of solid electrolyte/pre-interlayer was prepared as follows.

Te was deposited on the solid electrolyte by RF sputtering in an argon (Ar) atmosphere at a temperature of 25 °C to form a Te layer layer having a thickness of about 100nm to thereby prepare a laminate of solid electrolyte/Te layer.

After the all-solid secondary battery prepared according to Comparative Example 4 was charged and discharged, the interlayer contained a Te, LiTe$_x$ where $0<x\leq3$ and LiyO where $0<y\leq2$ having a thickness of about 30 nm.

According to Comparative Example 4, a negative active material (LiTex, $0<x\leq3$) was present in the interlayer.

Accordingly, electronic conduction was generated, thus causing short circuit.

Comparative Example 5: LCO (3.2 mAh/cm$^2$)/LLZTO/Li metal structure negative electrode

LLZTO ($Li_{6.5}La_3Zr_{1.5}Ta_{0.5}O_{12}$) pellets having a thickness of 350 $\mu$m were prepared as a solid electrolyte.

A second negative active material layer, in which a copper (Cu) foil that is a negative electrode current collector having a thickness of 10 $\mu$m coated with lithium (Li) metal having a thickness of thickness 20 $\mu$m, was stacked on the solid electrolyte. Then, a pressure of 100 MPa was applied thereto at a temperature of 25 °C by CIP to thereby preparing a negative electrode-solid electrolyte sub-assembly having a stacked structure of solid electrolyte layer/second negative active material layer/negative electrode current collector.

Evaluation Example 1: TEM-EDS analysis

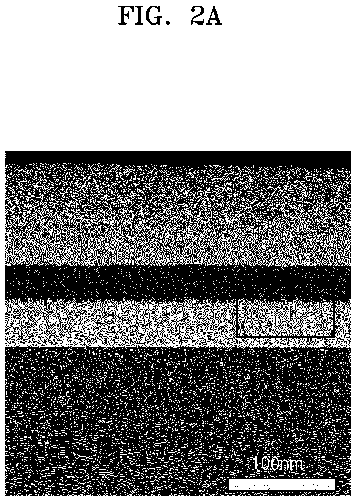

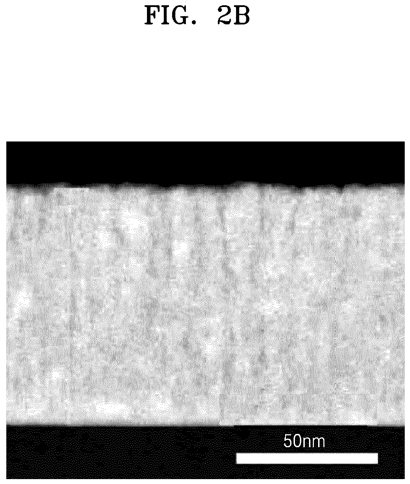

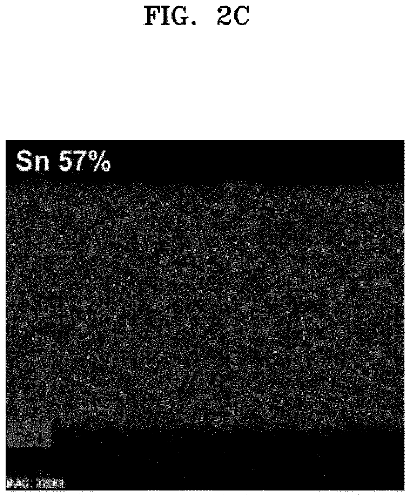

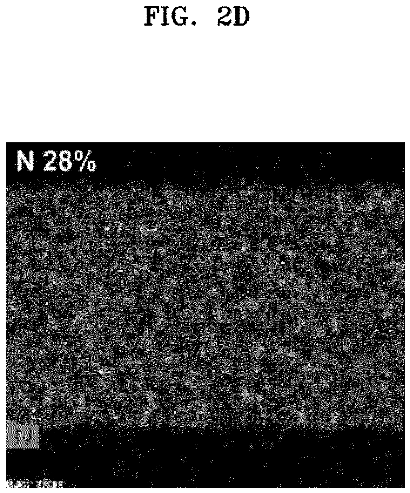

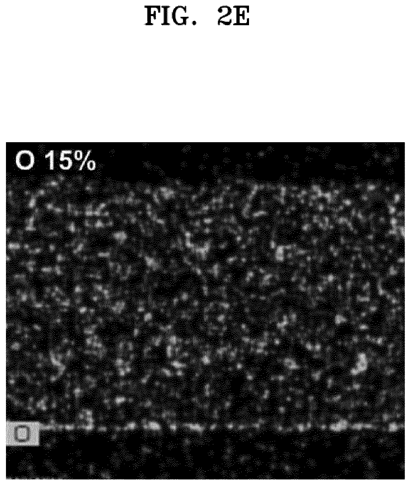

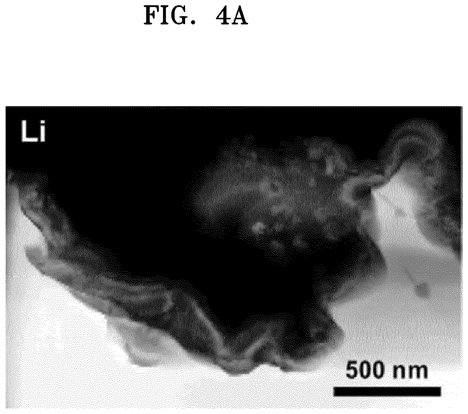

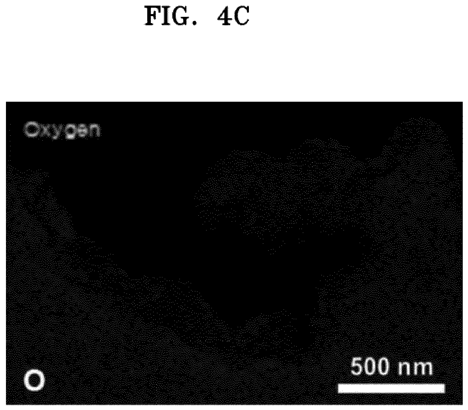

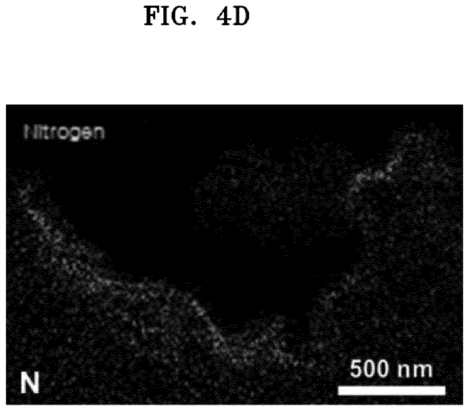

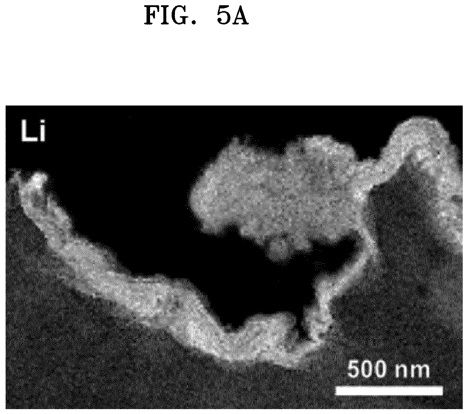

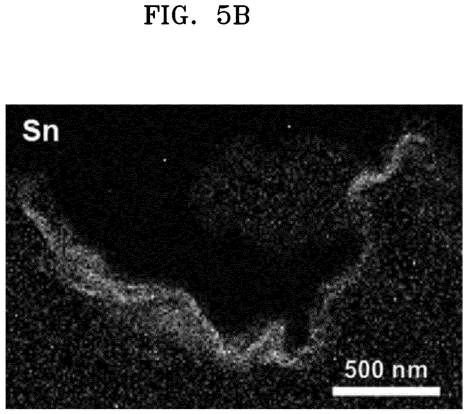

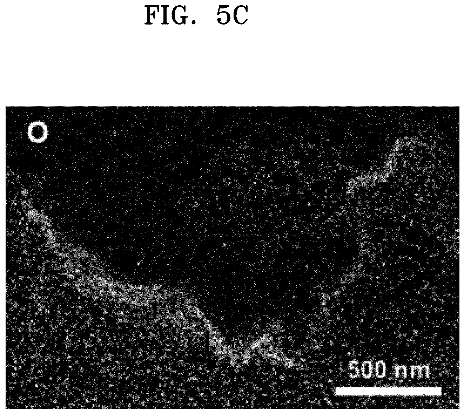

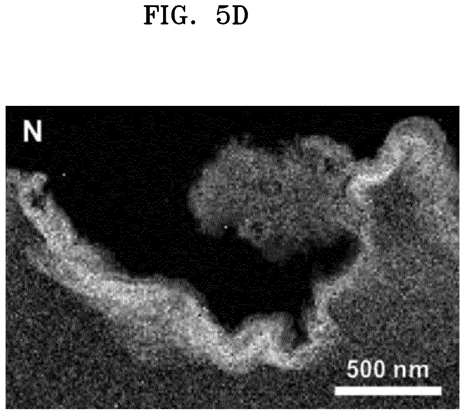

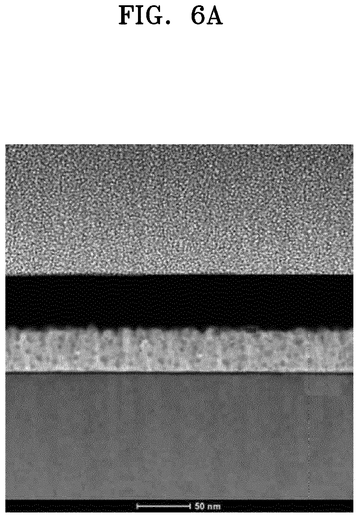

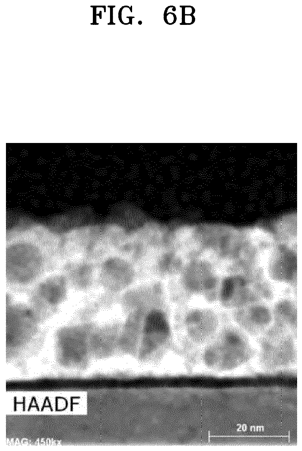

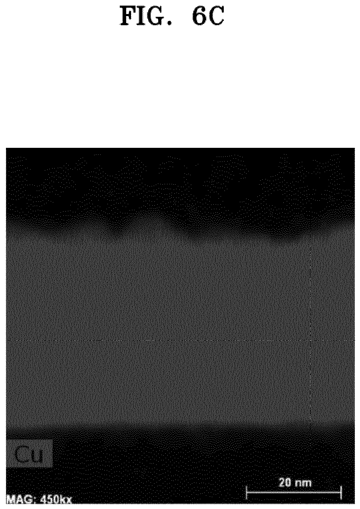

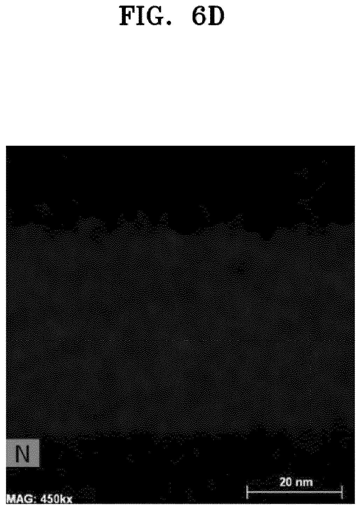

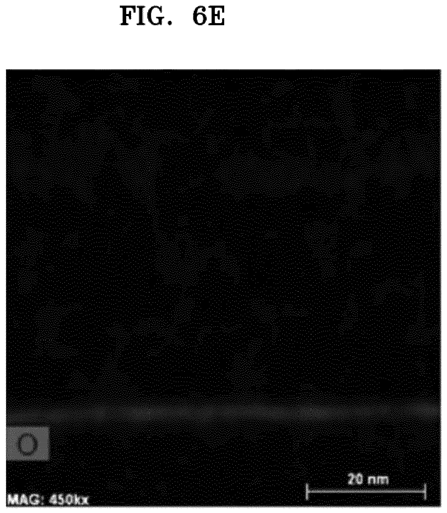

The all-solid secondary batteries prepared in Examples 1 and 2 were charged, and transmission electron microscopy/ energy dispersive X-ray spectroscopy (TEM/EDS) analysis was performed on the solid electrolyte-negative electrode sub-assembly. The results of analysis on the solid electrolyte-negative electrode sub-assembly of Example 1 are shown in FIGS. 2A to 2E. The results of EDS analysis on the solid electrolyte-negative electrode sub-assembly of Example 1 are shown in FIGS. 4A to 4D. The results of EELS analysis on the solid electrolyte-negative electrode sub-assembly of Example 1 are shown in FIGS. 5A to 5D. The results of EDS mapping on the all-solid secondary battery including the negative electrode-solid electrolyte sub-assembly according to Example 2 are shown in FIGS. 6A to 6E.

As shown in FIGS. 2A to 2E, the first negative active material layer in the solid electrolyte-negative electrode assembly of Example 1 contained tin, and nitrogen, and an oxide layer was formed as an interlayer in contact with the solid electrolyte. As shown in FIGS. 4A to 4D, a layer including nitrogen was found to be formed. As shown in FIGS. 5A to 5D, the layer including nitrogen was found to include lithium and tin.

As shown in FIGS. 6A to 6E, the first negative active material layer in the solid electrolyte-negative electrode sub-assembly of Example 2 contained copper, and nitrogen, and an oxide layer having a thickness of 3 to 4 nm was formed as an interlayer in contact with the solid electrolyte.

Evaluation Example 2: Evaluation of interfacial resistance

The interfacial resistance of each of the all-solid secondary batteries manufactured in Examples 1 to 3 and Comparative Examples 1 to 5 was measured. The impedance of pellets of each the all-solid secondary batteries was measured using an impedance analyzer (Solartron 1400A/1455A) according to 2-probe method at a temperature of 25 °C in an atmospheric condition. The frequency range was 0.1 Hertz (Hz) to 1 MHz, and the amplitude voltage was 10 millivolts (mV).

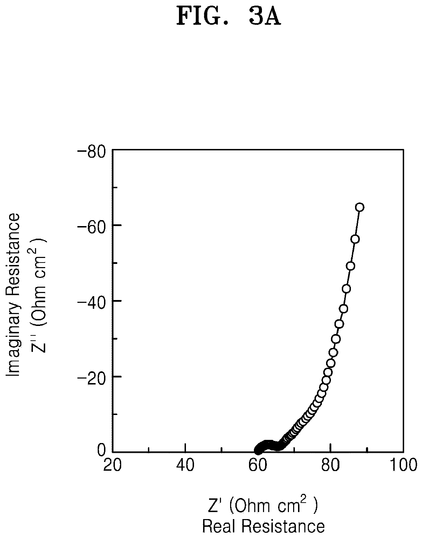

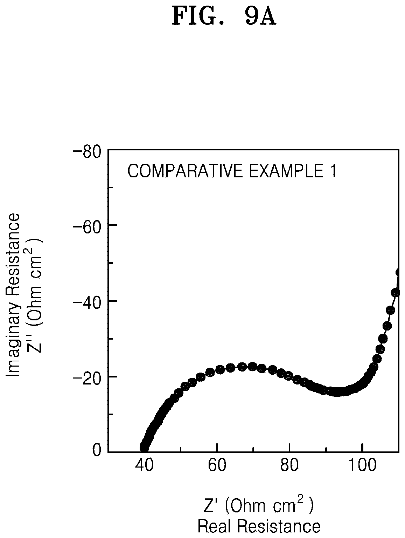

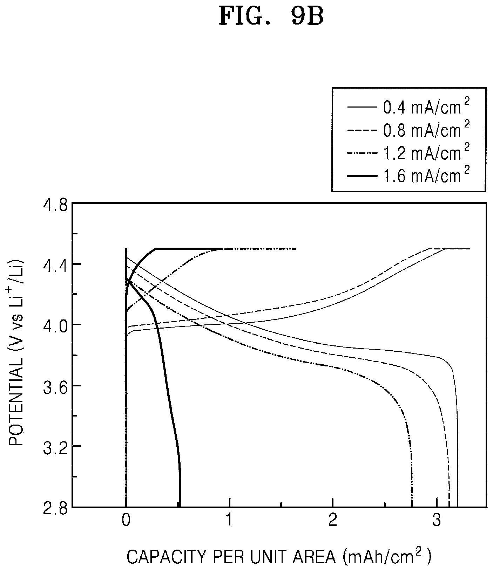

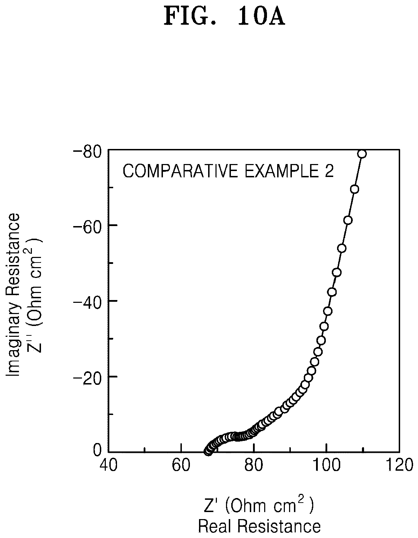

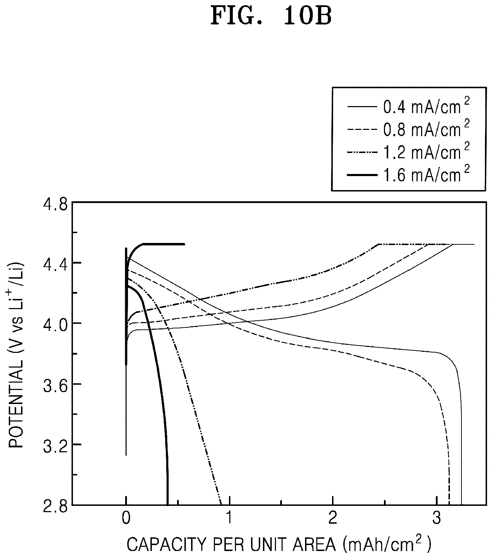

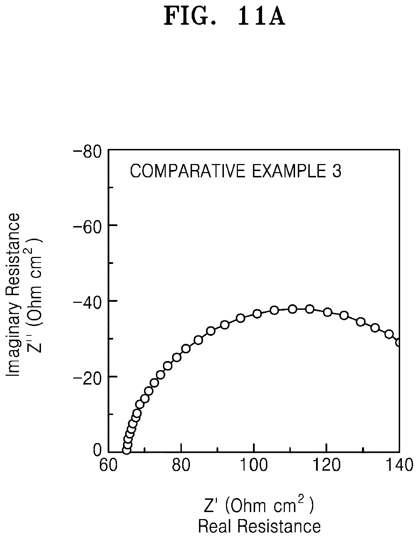

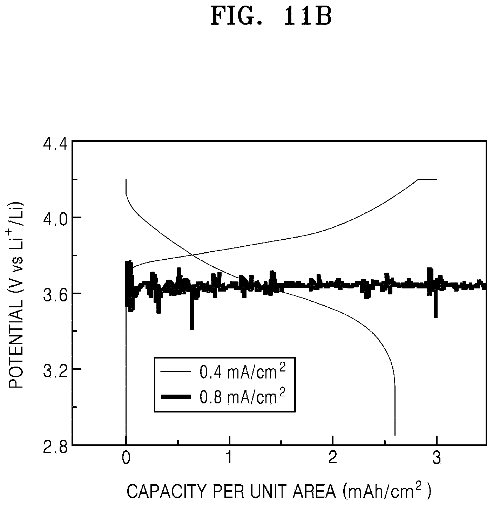

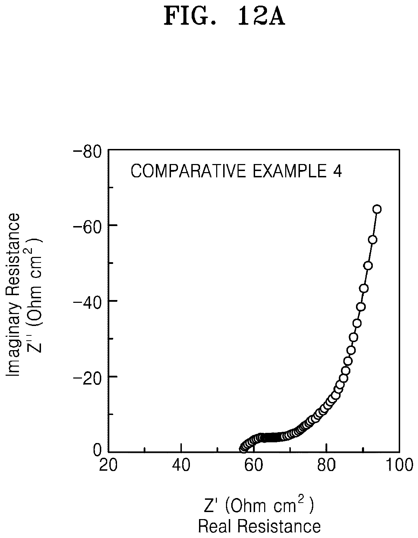

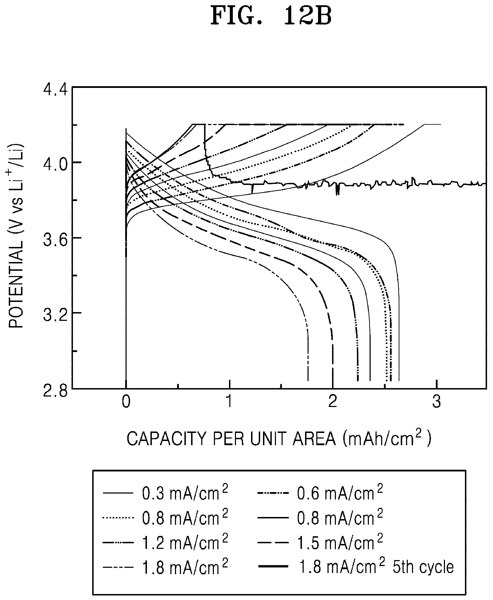

The Nyquist plot with respect to impedance measurement results on the solid electrolyte-negative electrode sub-assemblies of Examples 1 to 3 and Comparative Examples 1 to 5 are shown in FIGS. 3A, 7A, 7D, 9A, 10A, 11A, and 12A, respectively.

As shown in FIGS. 3A, 7A, 7D, 9A, 10A, 11A, and 12A, the all-solid secondary batteries of Examples 1, 2, and 3 were found to have significantly decreased interfacial resistance, as compared with the all-solid secondary battery of Comparative Examples 1 to 5.

Evaluation Example 3: Charging and discharging test (I)

Charge/discharge characteristics of the all-solid secondary batteries of Examples 1 and 2 and Comparative Examples 1 to 5 were evaluated by the following charge/discharge test. In the charge/discharge test, charging and discharging were performed while changing the current density at a temperature of 25 °C with a voltage range of 4.5 volts (V) to 2.75 V to identify driving characteristics in a high current density state of the all-solid secondary batteries.

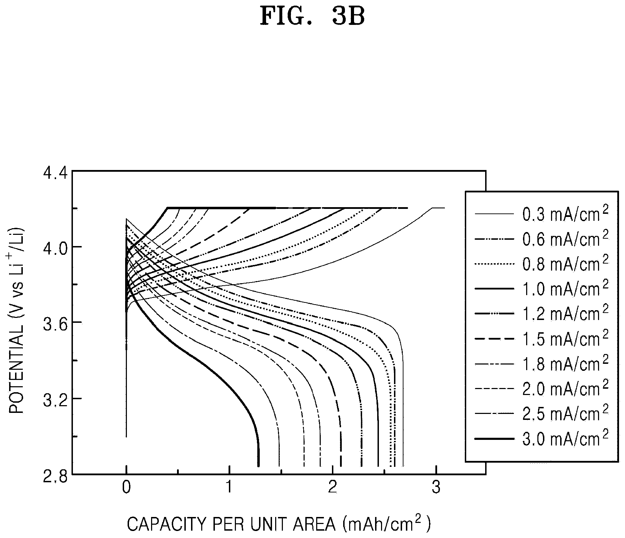

In order to identify operating characteristics of the all-solid secondary batteries in a high current density state, the charging and discharging test of the all-solid secondary batteries was performed at a temperature of 25 °C with various current densities as shown in FIGS. 3B (Example 1), 7B (Example 2), 9B (Comparative Example 1), 10B (Comparative Example 2), 11B (Comparative Example 3), 12B (Comparative Example 4), and 13 (Comparative Example 5). The charging and discharging cycle test was performed using the galvanostatic method to confirm the short-circuit prevention properties and the effect of improving cell performance of solid electrolytes. At this time, all negative electrode bonding was performed in the same method using CIP.

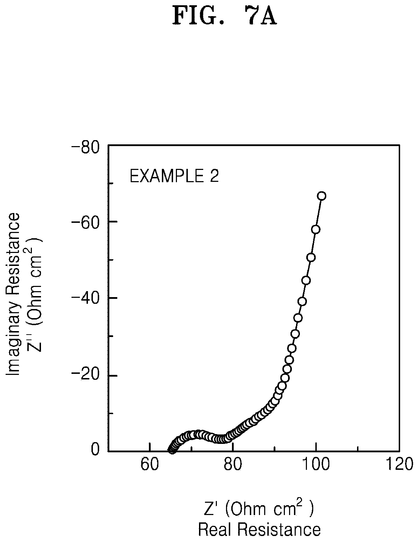

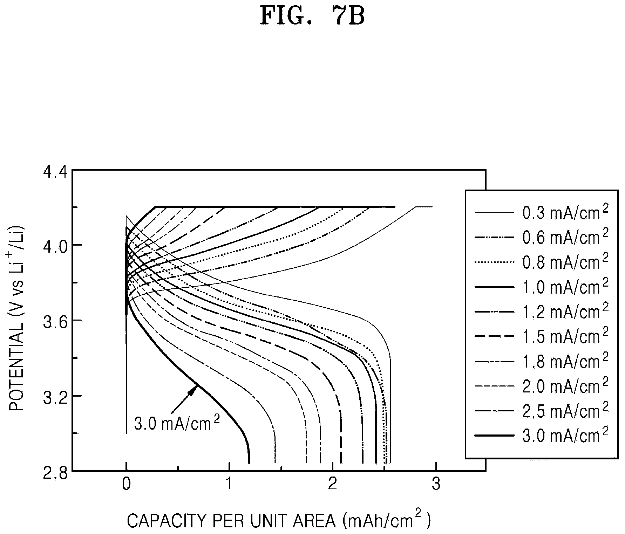

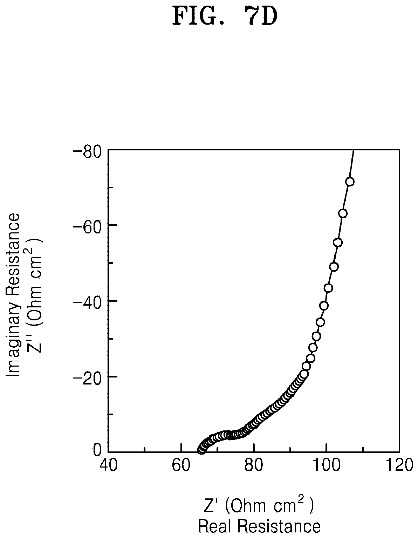

The partial results of charging and discharging of the all-solid secondary batteries are shown in FIGS. 3B (Example 1), 7B (Example 2), 9B (Comparative Example 1), 10B (Comparative Example 2), 11B (Comparative Example 3), 12B (Comparative Example 4), and 13 (Comparative Example 5). As shown in FIGS. 3B and FIG. 7B, in the all-solid secondary batteries of Examples 1 and 2 were found to be stably charged and discharged to 0.3 milliampere per square centimeter (mA/cm$^2$) to 3.0 mA/cm$^2$ without occurrence of short circuit, respectively.

When the all-solid secondary battery of Comparative Example 1 did not contain a first negative active material layer and include a thick interlayer consisting of oxide and metal, the interfacial resistance was 60 ohms-square centimeter (Ohm cm$^2$) or greater, and when the battery was charged and discharged by the galvanostatic method at a temperature of 25 °C, a discharge capacity of 1 mAh/cm$^2$ or less was obtained at a current density of 1.6 mA/cm$^2$, unlike the results of Examples 1 and 2.

When the all-solid secondary battery of Comparative Example 2 did not contain a first negative active material layer and included an interlayer consisting of oxide only, and when the battery was charged and discharged by the galvanostatic method at a temperature of 25 °C, a discharge capacity of 1 mAh/cm$^2$ or less was obtained at a current density of 1.6 mA/cm$^2$, unlike the results of Examples 1 and 2.

In the all-solid secondary battery of Comparative Example 3, a negative active material was present in the interlayer. Accordingly, electronic conduction was generated, thus causing a short circuit. In the all-solid secondary battery of Comparative Example 4, as in Comparative Example 3, the presence of metal in the interlayer resulted in electron conduction, and a short circuit was observed.

The all-solid secondary battery of Comparative Example 5 had no interlayer and first negative active material layer, resulting in a short circuit.

In contrast, as shown in FIGS. 3B and FIG. 7B, the all-solid secondary batteries of Examples 1 and 2 were found to be stably charged and discharged to 0.3 mA/cm$^2$ to 3.0 mA/cm$^2$ without occurrence of a short circuit, respectively. Therefore, it may be seen that the all-solid secondary batteries of Examples 1 and 2 are more stable than the all-solid secondary batteries of Comparative Examples 1 to 5. Accordingly, when a negative electrode has a multi-layered structure as in the all-solid secondary batteries of Examples 1 and 2, a volumetric change that may occur during charging and discharging may be alleviated, and a local concentration of current at high current densities may be reduced. Thus, short circuits of the all-solid secondary batteries were prevented.

Evaluation Example 4: Charging and discharging test (II)

Charge/discharge characteristics of the all-solid secondary batteries of Examples 1 and 2 were evaluated by the following charge/discharge test.

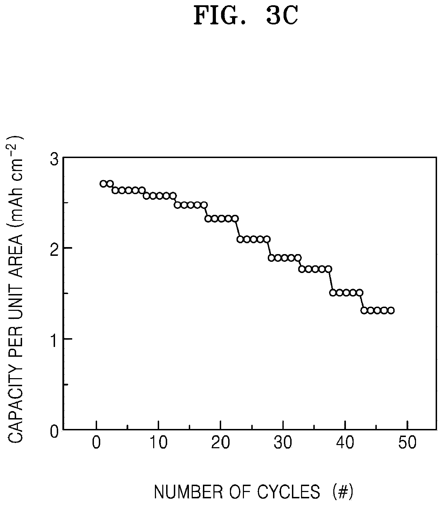

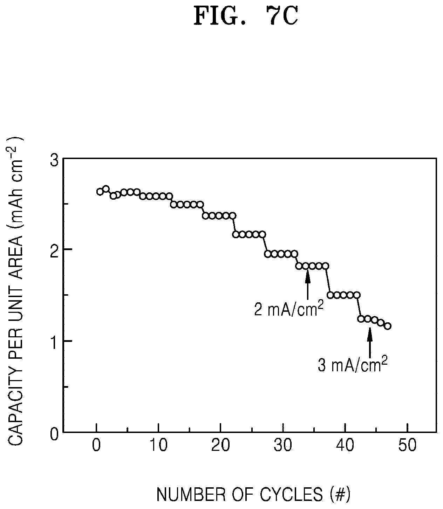

In the charge/discharge test, charging and discharging of each all-solid secondary battery were performed while changing the current density at a temperature of 25 °C with various current densities as shown in FIGS. 3B and 3C, and FIGS 7B and 7C to identify driving characteristics in a high current density state of the all-solid secondary batteries. FIGS. 3B and 3C are with respect to Example 1, and FIGS 7B and 7C are with respect to Example 2. The charging and discharging cycle test was performed using the galvanostatic method to confirm the short-circuit prevention properties and the effect of improving cell performance of solid electrolytes. At this time, all negative electrode bonding was performed in the same method using CIP.

The all-solid secondary batteries of Examples 1 and 2 showed stable charging and discharging characteristics even at a current density of 3 mA/cm$^2$ as shown in FIGS. 3B and 7B, and 50 cycles of charging and discharging were performed without short circuit as shown in FIGS. 3C and 7C. Stable charging and discharging characteristics were observed even at a current density of 3 mA/cm$^2$. As such, it was confirmed that a stable interlayer and first negative active material layer were maintained during charging and discharging by controlling the lithium movement speed in the negative electrode.

When charging and discharging the battery at 25 °C using the galvanostatic method, lithium diffusion at the interface is fast, and in a case of a battery to which a multi-layered negative electrode (Example 1) that may maintain a stable interface even during discharge was applied, stable charging and discharging behavior was exhibited even at a current density of 3 mA/cm$^2$. The bonding strength with the second layer was increased by using the first layer, uniform lithium plating was carried out using fast diffusion in the second layer, and at this time, lithium ion conductors such as nitride maintained the matrix structure to ensure the durability of the two layers, and the third layer acted as a site where lithium may be easy to precipitate. Accordingly, even during repeated charging and discharging, lithium was stably deposited on the third layer, preventing deterioration of the negative electrode and short circuit of the battery even during high-rate charging and discharging.

In addition, the charge and discharge characteristics of the all-solid-state secondary battery of Examples 3-4 were evaluated in the same manner as in the evaluation method for the charge and discharge characteristics of the all-solid-state secondary battery of Example 1.

As a result of the evaluation, the charge and discharge characteristics of the all-solid-state secondary battery of Examples 3-4 showed stable charge and discharge even at a current density of 3 mA/cm2, similar to the charge and discharge characteristics of the all-solid-state secondary battery of Example 1, and charge/discharge was performed up to 50 cycles without short circuit., and stable charge/discharge was shown even at a current density of 3 mA/cm2.

Evaluation Example 5: XPS analysis

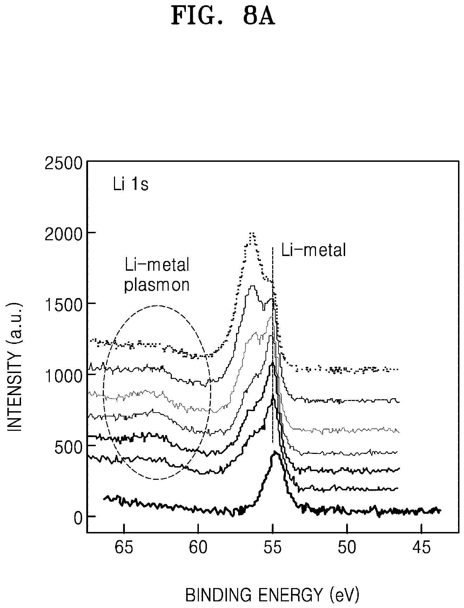

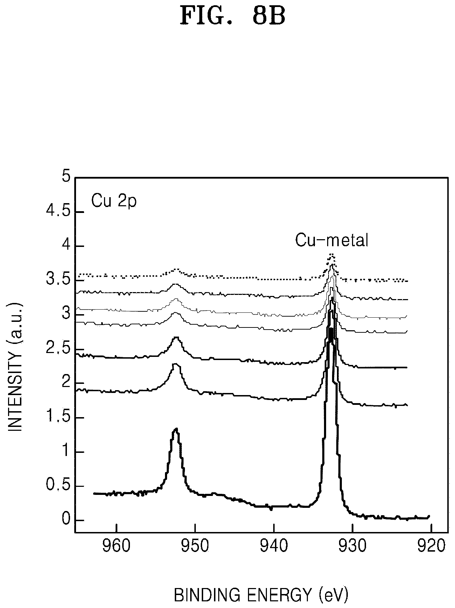

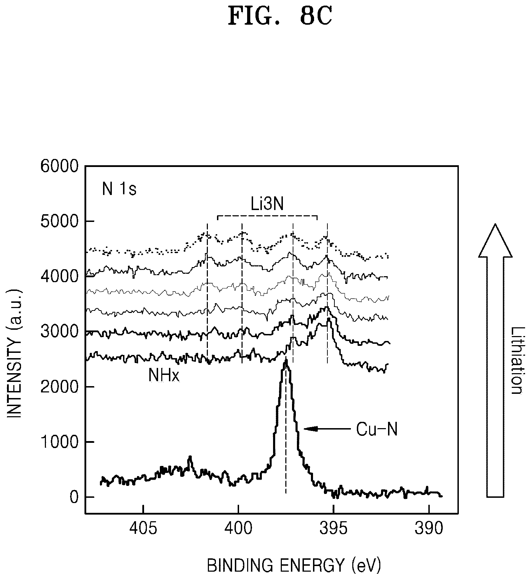

After reacting CuNx and Li, the precursor for forming the first negative active material layer according to Example 2, XPS analysis for forming of the final second layer was performed, and the results of the analysis are shown in FIGS. 8A to 8C. FIGS. 8A, 8B, and 8C are each the XPS analysis result for Li, Cu, and N, respectively.

As shown in FIGS. 8A and 8B, the presence of lithium and copper was identified. In addition, as shown in FIG. 8C, Cu-N bond was disappeared, however, $Li_3N$ bond was newly formed. As a result, it was confirmed that the first negative active material layer had a composite composition of LiCu and $Li_3N$.

When the first anode active material layer was a mixture of LiCu and LiN, the Cu-N peak at the binding energy of 395 to 400 eV shown in FIG. 8c was absent or shifted toward a lower binding energy.

Evaluation Example 6: Transmission electron microscopy-energy dispersive x-ray spectroscopy (TEM-EDS) and TEM-Electron Energy Loss Spectroscopy (TEM-EELS) analysis

The all-solid secondary battery prepared in Example 1 was charged, and the cross-section of the laminate of solid electrolyte/interlayer/first negative active material layer/second negative active material layer was subjected to TEM/EDS and TEM/ELLS analysis. The results of TEM/EDS analysis on the solid electrolyte-negative electrode assembly of Example 1 are shown in FIGS. 4A to 4D. The results of TEM/EELS analysis on the solid electrolyte-negative electrode sub-assembly of Example 1 are shown in FIGS. 5A to 5D.

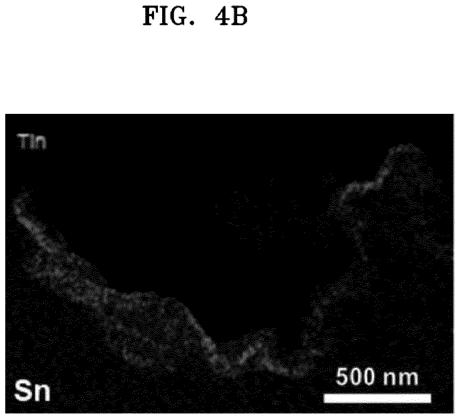

As shown in FIGS. FIGS. 4A to 4D and 5A to 5D, according to Example 1, the interlayer (Layer 1), the first negative active material layer (Layer 2), and the second negative active material layer (Layer 3) were sequentially formed between the solid electrolyte and the negative electrode current collector. As shown in FIGs.4B to 4D, it was found that the first negative active material layer contained nitrogen, the first negative active material layer and the interlayer contained tin (Sn), and the interlayer contained oxygen (O).

According to the an embodiment, in a negative electrode for an all-solid secondary battery, to prevent negative electrode deterioration due to aggregation or volume expansion when reacting with lithium during battery charging and discharging and to prevent rate characteristic deterioration due to slow lithium movement, a first negative active material layer containing nitride, which has a fast lithium movement speed, may be introduced, and thus lithium may be uniformly distributed, and volume expansion may be alleviated. Accordingly, an all-solid secondary battery with high rate characteristics and lifespan characteristics may be manufactured.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A negative electrode-solid electrolyte sub-assembly for an all-solid secondary battery comprising:

a negative electrode current collector;
a first negative active material layer disposed on the negative electrode current collector;
an interlayer disposed on the first negative active material layer and opposite the negative electrode current collector; and
a solid electrolyte disposed on the interlayer and opposite the first negative active material layer,
wherein the first negative active material layer comprises a mixture of a compound of Formula 1 and a compound of Formula 2, a composite of the compound of Formula 1 and the compound of Formula 2, or a combination thereof,

Formula 1 $\qquad$ $Li_xM1_y$

wherein, in Formula 1, M1 is a first metal and is an element capable of forming a compound or an alloy with lithium and oxygen, and

$$0 \le x \le 20 \text{ and } 1 \le y \le 10,$$

Formula 2          $M2_aN_b$

wherein, in Formula 2, M2 is a second metal and is lithium, an element capable of forming a compound or an alloy with lithium and nitrogen, or a combination thereof, and

$$1 \le a \le 15 \text{ and } 1 \le b \le 10,$$

wherein the interlayer comprises a third metal material, lithium oxide, or a combination thereof, and
the third metal material comprises a third metal oxide, an oxide comprising a third metal and lithium, or a combination thereof,
wherein the third metal is an element of Groups 2 to 15.

2. The negative electrode-solid electrolyte sub-assembly of claim 1, wherein, in Formula 1, the first metal is aluminum, zinc, tin, silicon, germanium, copper, indium, gallium, titanium, zirconium, niobium, antimony, bismuth, gold, platinum, palladium, nickel, iron, cobalt, chromium, magnesium, cesium, cerium, silver, sodium, potassium, calcium, yttrium, tantalum, hafnium, barium, vanadium, strontium, tellurium, lanthanum, or a combination thereof, in Formula 2, the second metal is aluminum, zinc, tin, silicon, germanium, copper, indium, gallium, titanium, zirconium, niobium, antimony, bismuth, gold, platinum, palladium, nickel, iron, cobalt, chromium, magnesium, cesium, cerium, silver, sodium, potassium, calcium, yttrium, tantalum, hafnium, barium, vanadium, strontium, tellurium, lanthanum, or a combination thereof, wherein the compound of Formula 1 is $Li_3Al$, $Li_2Zn$, $Li_4Sn$, $LixSi_y$ wherein $1 \le x \le 3$ and $1 \le y \le 3$, $Li_xGe_y$ wherein $1 \le x \le 3$ and $1 \le y \le 3$, $Li_xCu_y$ wherein $1 \le x \le 3$ and $1 \le y \le 3$, $Li_xSn$ wherein $0 < x < 5$, $Li_xZn$ wherein $0 < x < 5$, $Li_xAl$ wherein $0 < x < 5$, $Li_xSb$ wherein $0 < x < 4$, $Li_xSi$ wherein $0 < x < 5$, $Li_xAu$ wherein $0 < x < 5$, $Li_xAg$ wherein $0 < x < 10$, $Li_xIn$ wherein $0 < x < 5$, $Li_xBi$ wherein $0 < x < 5$, $Li_xGa$ wherein $0 < x < 5$, $Li_xTe$ wherein $0 < x < 5$, $Li_xGe$ wherein $0 < x < 5$, $Li_xMg$ wherein $0 < x < 7$, or a combination thereof, and wherein the compound of Formula 2 is $Li_3N$, $Al_aN_b$ wherein $1 \le a \le 3$ and $1 \le b \le 4$, $Zn_aN_b$ wherein $1 \le a \le 3$ and $1 \le b \le 4$, $Sn_aN_b$ wherein $1 \le a \le 3$ and $1 \le b \le 4$, $Si_aN_b$ wherein $1 \le a \le 3$ and $1 \le b \le 4$, $Ge_aN_b$ wherein $1 \le a \le 3$ and $1 \le b \le 4$, $Cu_aN_b$ wherein $1 \le a \le 3$ and $1 \le b \le 4$, $In_aN_b$ wherein $1 \le a \le 3$ and $1 \le b \le 4$, $Ga_aN_b$ wherein $1 \le a \le 3$ and $1 \le b \le 4$, $Ti_aN_b$ wherein $1 \le a \le 3$ and $1 \le b \le 4$, $Zr_aN_b$ wherein $1 \le a \le 3$ and $1 \le b \le 4$, $Nb_aN_b$ wherein $1 \le a \le 3$ and $1 \le b \le 4$, or a combination thereof, or
wherein the compound of Formula 2 is $Li_3N$, $AlN$, $Zn_3N_2$, $Sn_3N_4$, $Si_3N_4$, $Ge_3N_4$, $Cu_3N$, or a combination thereof.

3. The negative electrode-solid electrolyte sub-assembly of claims 1 or 2, wherein the first negative active material layer further comprises a compound represented by Formula 3:

Formula 3          M2aOb

wherein, in Formula 3, M2 is the second metal and is lithium, an element capable of forming a compound or an alloy with lithium and nitrogen, or a combination thereof, and

$$1 \le a \le 20 \text{ and } 1 \le b \le 10;$$

preferably wherein, in Formula 3, the second metal is Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La, or a combination thereof,
preferably wherein the compound of Formula 3 is $SnO_2$, $CuO$, $SiO_2$, $GeO$, $Al_2O_3$, $ZnO_2$, or a combination thereof.

4. The negative electrode-solid electrolyte sub-assembly of any of claims 1-3, wherein the first negative active material layer is a mixture of $Li_xSn_y$ wherein $1 \le x \le 3$ and $1 \le y \le 3$, and $Li_aN_b$ wherein $1 \le a \le 3$ and $1 \le b \le 4$, a mixture of $Li_xSn_y$ wherein $1 \le x \le 3$ and $1 \le y \le 3$, $Sn_aN_b$ wherein $1 \le a \le 3$ and $1 \le b \le 4$, and $SnO_2$, a mixture of Li, $Cu_xN_y$ wherein $1 \le x \le 3$ and $1 \le y \le 3$, and $Li_xN_y$ wherein $x=3$ and $y=1$, a mixture of $Li_xCu_y$ wherein $1 \le x \le 3$ and $1 \le y \le 3$ and $Li_aN_b$ wherein $1 \le a \le 3$ and $1 \le b \le 4$, a composite of $Li_xSn_y$ wherein $1 \le x \le 3$ and $1 \le y \le 3$, and $Li_aN_b$ wherein $1 \le a \le 3$ and $1 \le b \le 4$, a composite of $Li_xSn_y$ wherein $1 \le x \le 3$ and $1 \le y \le 3$, $Sn_aN_b$ wherein $1 \le a \le 3$ and $1 \le b \le 4$, and $SnO_2$, a composite of Li, $Cu_xN_y$ wherein $1 \le x \le 3$ and $1 \le y \le 3$, and $Li_xN_y$ wherein $x=3$ and $y=1$, a composite of $Li_xCu_y$ wherein $1 \le x \le 3$ and $1 \le y \le 3$ and $Li_aN_b$ wherein $1 \le a \le 3$ and $1 \le b \le 4$, or a combination thereof.

5. The negative electrode-solid electrolyte sub-assembly of any of claims 1-4, wherein a thickness of the first negative active material layer is in a range of 1 nanometer to 100 micrometers; and/or

wherein the third metal material of the interlayer is a mixture of a compound of Formula 4 and a compound of Formula 5, a composite of the compound of Formula 4 and the compound of Formula 5, or a combination thereof:

Formula 4 $\quad\quad Li_a\text{-}M3_b\text{-}O_c$

wherein, in Formula 4, M3 is the third metal and is Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La, or a combination thereof, and

$$1 \leq a \leq 20,\ 1 \leq b \leq 10,\ and\ 1 \leq c \leq 10,$$

Formula 5 $\quad\quad M3_cO_d$

wherein, in Formula 5, M3 is the third metal and is Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La, or a combination thereof, and

$$1 \leq c \leq 20 \text{ and } 1 \leq d \leq 30.$$

6. The negative electrode-solid electrolyte sub-assembly of any of claims 1-5, wherein the third metal material is a composite of $Li_a\text{-}Sn_b\text{-}O_c$ wherein $0<a\leq9$, $0<b\leq3$, and $0<c\leq7$, and $Sn_cO_d$ wherein $O<c\leq3$ and $0<d\leq4$, a composite of $Li_a\text{-}Cu_b\text{-}O_c$ wherein $0<a\leq9$, $0<b\leq3$, and $0<c\leq7$, and $Cu_cO_d$ wherein $0<c\leq5$ and $0<d\leq24$, a mixture of $Li_a\text{-}Sn_b\text{-}O_c$ wherein $0<a\leq9$, $0<b\leq3$, and $0<c\leq7$, and $Sn_cO_d$ wherein $0<c\leq3$ and $0<d\leq4$, a mixture of $Li_a\text{-}Cu_b\text{-}O_c$ wherein $0<a\leq9$, $0<b\leq3$, and $0<c\leq7$, and $CU_cO_d$ wherein $0<c\leq5$ and $0<d\leq24$, or a combination thereof.

7. The negative electrode-solid electrolyte sub-assembly of any of claims 1-6, wherein a thickness of the interlayer is in a range of 5 nanometers to 100 nanometers, and
wherein a volume of the first negative active material layer after charging the all-solid secondary battery is 200 percent or less than a volume of the first negative active material layer after discharging.

8. The negative electrode-solid electrolyte sub-assembly of any of claims 1-7, further comprising a second negative active material layer disposed between the negative electrode current collector and the first negative active material layer, and wherein the second negative active material layer comprises a fourth metal material, and the fourth metal material is a fourth metal, a lithium alloy of lithium and the fourth metal, or a combination thereof,

wherein the fourth metal is an element of Groups 2 to 15, and wherein the fourth metal comprises lithium, silver, tin, indium, silicon, gallium, aluminum, titanium, zirconium, niobium, germanium, antimony, bismuth, zinc, gold, platinum, palladium, nickel, iron, cobalt, chromium, magnesium, cesium, lanthanum, tungsten, tellurium, a lithium alloy, or a combination thereof,
wherein the lithium alloy comprises
lithium, and
silver, tin, indium, silicon, gallium, aluminum, titanium, zirconium, niobium, germanium, antimony, bismuth, zinc, gold, platinum, palladium, nickel, iron, cobalt, chromium, magnesium, cesium, lanthanum, tungsten, tellurium, or a combination thereof, wherein the fourth metal is the lithium metal, the lithium alloy, or a combination thereof.

9. The negative electrode-solid electrolyte sub-assembly of any of claims 1-8, wherein four to five peaks are observed in a region of 393 electronvolts to 405 electronvolts in a graph of intensity versus binding energy, when the first negative active material layer is analyzed by X-ray photoelectron spectroscopy.

10. An all-solid secondary battery comprising:

a positive electrode; and
the negative electrode-solid electrolyte sub-assembly of any of claims 1-9 disposed on the positive electrode, wherein the solid electrolyte is between the positive electrode and the negative electrode;
preferably wherein the solid electrolyte comprises an oxide solid electrolyte, a sulfide solid electrolyte, or a combination thereof, and wherein the oxide solid electrolyte is $Li_{1+x+y}Al_xTi_{2-x}Si_yP_{3-y}O_{12}$ wherein $0<x<2$ and $0\leq y<3$, $Li_3PO_4$, $Li_xTi_y(PO_4)_3$ wherein $0<x<2$ and $0<y<3$, $Li_xAl_yTi_z(PO_4)_3$ wherein $0<x<2$, $0<y<1$, and $0<z<3$, $Li_{1+x+y}(Al_pGa_{1-p})_x(Ti_qGe_{1-q})_{2-x}Si_yP_{3-y}O_{12}$ wherein $0\leq x\leq1$, $0\leq y\leq1$, $0\leq p\leq1$, and $0\leq q\leq1$, $Li_xLa_yTiO_3$ wherein $0<x<2$ and $0<y<3$, $Li_2O$, $LiOH$, $Li_2CO_3$, $LiAlO_2$, $Li_2O\text{-}Al_2O_3\text{-}SiO_2\text{-}P_2O_5\text{-}TiO_2\text{-}GeO_2$, $Li_{3+x}La_3M_2O_{12}$ wherein M is Te, Nb, or Zr, and x is an integer from 1 to 10, or a combination thereof, and wherein the oxide solid electrolyte is a Garnet-type solid electrolyte, and the Garnet-type solid electrolyte comprises an oxide represented by Formula 6:

Formula 6 $\qquad (Li_xM1_y)(La_{a1}M2_{a2})_{3-\delta}(Zr_{b1}M3_{b2})_{2-\omega}O_{12-z}X_z$

wherein, in Formula 6, M1 is hydrogen, iron, gallium, aluminum, boron, beryllium, or a combination thereof, M2 is barium, calcium, strontium, yttrium, bismuth, praseodymium, neodymium, actinium, samarium, gadolinium, or a combination thereof,
M3 is hafnium, tin, niobium, titanium, vanadium, chromium, manganese, cobalt, nickel, copper, molybdenum, tungsten, tantalum, magnesium, technetium, ruthenium, palladium, iridium, scandium, cadmium, indium, antimony, tellurium, thallium, platinum, silicon, aluminum, or a combination thereof,

$$3\leq x\leq8,\ 0\leq y<2,\ -0.2\leq\delta\leq0.2,\ -0.2\leq\omega\leq0.2,\ \text{and}\ 0\leq z\leq2,$$

$$a1+a2=1,\ 0<a1\leq1,\ \text{and}\ 0\leq a2<1,$$

$$b1+b2=1,\ 0<b1<1,\ \text{and}\ 0\leq b2<1,$$

and
X is a monovalent anion, a divalent anion, a trivalent anion, or a combination thereof, and wherein the oxide solid electrolyte is an oxide represented by Formula 7:

Formula 7 $\qquad Li_{3+x}La_3Zr_{2-a}M_aO_{12}$

wherein, in Formula 7, M is Al, Ga, In, Si, Ge, Sn, Sb, Bi, Sc, Y, Ti, Hf, V, Nb, Ta, W, or a combination thereof, and x is an integer from 1 to 10, and $0\leq a<2$, and wherein the sulfide solid electrolyte is $Li_2S\text{-}P_2S_5$, $Li_2S\text{-}P_2S_5\text{-}LiX$ wherein X is halogen, $Li_2S\text{-}P_2S_5\text{-}Li_2O$, $Li_2S\text{-}P_2Ss\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ wherein m and n are positive integers, and Z is one of Ge, Zn, or Ga, $Li_2S\text{-}GeS_2$, $Li_2S\text{-}SiS_2\text{-}Li_3PO_4$, $Li_2S\text{-}SiS_2\text{-}Li_pMO_q$ wherein p and q are positive integers, and M is one of P, Si, Ge, B, Al, Ga, or In, $Li_{7-x}PS_{6-x}Cl_x$ wherein $0<x<2$, $Li_{7-x}PS_{6-x}Br_x$ wherein $0<x<2$, $Li_{7-x}PS_{6-x}I_x$ wherein $0<x<2$, or a combination thereof.

11. The all-solid secondary battery of claim 10, wherein the negative electrode current collector, the interlayer, the first negative active material layer, and a region between the negative electrode current collector, the interlayer, and the first negative active material layer is a lithium metal-free region that does not comprise lithium metal in an initial state or a state after discharge of the all-solid secondary battery.

12. A method of preparing the all-solid secondary battery of claims 10 or 11, the method comprising:

providing the positive electrode;
disposing the solid electrolyte on the positive electrode;
disposing the interlayer on a first surface of the solid electrolyte opposite a second surface of the solid electrolyte on which the positive electrode is disposed; disposing the first negative active material layer on the interlayer and opposite the solid electrolyte; and
disposing the negative electrode current collector on the first negative active material layer opposite the interlayer, to prepare the all-solid secondary battery,
wherein the first negative active material layer comprises a mixture of a compound of Formula 1 and a compound of Formula 2, a composite of the compound of Formula 1 and the compound of Formula 2, or a combination thereof,

Formula 1 $Li_xM1_y$

wherein, in Formula 1, M1 is the first metal and is an element capable of forming a compound or an alloy with lithium and oxygen, and

$$0 \leq x \leq 20 \text{ and } 1 \leq y \leq 10,$$

Formula 2 $M2_aN_b$

wherein, in Formula 2, M2 is the second metal and is lithium, an element capable of forming a compound or an alloy with lithium and nitrogen, or a combination thereof, and

$$1 \leq x \leq 15 \text{ and } 1 \leq b \leq 10;$$

preferably wherein the disposing of the interlayer and the first negative active material layer comprises:

depositing the first metal on the solid electrolyte in a nitrogen atmosphere to form a first layer comprising a first metal nitride layer; and
contacting the first layer with lithium,
charging the all-solid secondary battery to supply lithium to the first layer,
heat-treating the first layer, or a combination thereof,

to simultaneously form the interlayer and the first negative active material layer using the first layer.

13. The method of claim 12,
wherein the disposing of the interlayer and the first negative active material layer comprises:

disposing the first metal on the solid electrolyte in an oxygen atmosphere to form a second layer comprising a first metal oxide layer and to form the interlayer therefrom; and
depositing the first metal on the second layer in a nitrogen atmosphere to form a first layer comprising the first metal nitride layer and to form the first negative active material layer therefrom.

14. The method of claims 12 or 13, further comprising charging the all-solid secondary battery to form an alloy from the second metal in the first negative active material layer and lithium.

15. The method of any of claims 12-14, further comprising:

providing a second negative active material layer between the negative electrode current collector and the first negative active material layer,
wherein the second negative active material layer comprises a fourth metal material, and
the fourth metal material is a fourth metal, a lithium alloy of lithium and the fourth metal, or a combination thereof,
wherein the fourth metal is an element of Groups 2 to 15, and wherein the fourth metal comprises silver, tin, indium, silicon, gallium, aluminum, titanium, zirconium, niobium, germanium, antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La), tungsten (W), tellurium (Te), a lithium alloy, or a combination thereof,
wherein the lithium alloy comprises silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), Cerium (Ce), lanthanum (La), tungsten (W), tellurium (Te), or a combination thereof.

**Patentansprüche**

1. Negativelektroden-Festelektrolyt-Unteranordnung für eine Festkörpersekundärbatterie, umfassend:

einen Negativelektrodenstromkollektor;

eine erste negative Aktivmaterialschicht, die auf dem Negativelektrodenstromkollektor angeordnet ist;

eine Zwischenschicht, die auf der ersten negativen Aktivmaterialschicht und gegenüber dem Negativelektrodenstromkollektor angeordnet ist; und

einen Festelektrolyten, der auf der Zwischenschicht und gegenüber der ersten negativen Aktivmaterialschicht angeordnet ist,

wobei die erste negative Aktivmaterialschicht ein Gemisch aus einer Verbindung der Formel 1 und einer Verbindung der Formel 2, einen Verbundstoff aus der Verbindung der Formel 1 und der Verbindung der Formel 2 oder eine Kombination davon umfasst,

Formel 1 $\quad\quad Li_xM1_y$

wobei, in Formel 1, M1 ein erstes Metall ist und ein Element ist, das fähig ist zum Bilden einer Verbindung oder einer Legierung mit Lithium und Sauerstoff, und

$$0 \leq x \leq 20 \text{ und } 1 \leq y \leq 10,$$

Formel 2 $\quad\quad M2_aN_b$

wobei, in Formel 2, M2 ein zweites Metall ist und Lithium ist, ein Element, das fähig ist zum Bilden einer Verbindung oder einer Legierung mit Lithium und Stickstoff oder einer Kombination davon, und

$$1 \leq a \leq 15 \text{ und } 1 \leq b \leq 10,$$

wobei die Zwischenschicht ein drittes Metallmaterial, Lithiumoxid oder eine Kombination davon umfasst, und das dritte Metallmaterial ein drittes Metalloxid, ein Oxid umfassend ein drittes Metall und Lithium oder eine Kombination davon umfasst, wobei das dritte Metall ein Element der Gruppen 2 bis 15 ist.

2. Negativelektroden-Festelektrolyt-Unteranordnung nach Anspruch 1, wobei, in Formel 1, das erste Metall Aluminium, Zink, Zinn, Silizium, Germanium, Kupfer, Indium, Gallium, Titan, Zirkonium, Niob, Antimon, Wismut, Gold, Platin, Palladium, Nickel, Eisen, Kobalt, Chrom, Magnesium, Cäsium, Cer, Silber, Natrium, Kalium, Kalzium, Yttrium, Tantal, Hafnium, Barium, Vanadium, Strontium, Tellur, Lanthan oder eine Kombination davon ist, in Formel 2, das zweite Metall Aluminium, Zink, Zinn, Silizium, Germanium, Kupfer, Indium, Gallium, Titan, Zirkonium, Niob, Antimon, Wismut, Gold, Platin, Palladium, Nickel, Eisen, Kobalt, Chrom, Magnesium, Cäsium, Cer, Silber, Natrium, Kalium, Kalzium, Yttrium, Tantal, Hafnium, Barium, Vanadium, Strontium, Tellur, Lanthan oder eine Kombination davon ist, wobei die Verbindung der Formel 1 $Li_3Al$, $Li_2Zn$, $Li_4Sn$, $Li_xSi_y$, wobei $1 \leq x \leq 3$ und $1 \leq y \leq 3$, $Li_xGe_y$, wobei $1 \leq x \leq 3$ und $1 \leq y \leq 3$, $Li_xCu_y$, wobei $1 \leq x \leq 3$ und $1 \leq y \leq 3$, $Li_xSn$, wobei $0 < x < 5$, $Li_xZn$, wobei $0 < x < 5$, $Li_xAl$, wobei $0 < x < 5$, $Li_xSb$, wobei $0 < x < 4$, $Li_xSi$, wobei $0 < x < 5$, $Li_xAu$, wobei $0 < x < 5$, $Li_xAg$, wobei $0 < x < 10$, $Li_xIn$, wobei $0 < x < 5$, $Li_xBi$, wobei $0 < x < 5$, $Li_xGa$, wobei $0 < x < 5$, $Li_xTe$, wobei $0 < x < 5$, $Li_xGe$, wobei $0 < x < 5$, $Li_xMg$, wobei $0 < x < 7$, oder eine Kombination davon ist und wobei die Verbindung der Formel 2 $Li_3N$, $Al_aN_b$, wobei $1 \leq a \leq 3$ und $1 \leq b \leq 4$, $Zn_aN_b$, wobei $1 \leq a \leq 3$ und $1 \leq b \leq 4$, $Sn_aN_b$, wobei $1 \leq a \leq 3$ und $1 \leq b \leq 4$, $Si_aN_b$, wobei $1 \leq a \leq 3$ und $1 \leq b \leq 4$, $Ge_aN_b$, wobei $1 \leq a \leq 3$ und $1 \leq b \leq 4$, $Cu_aN_b$, wobei $1 \leq a \leq 3$ und $1 \leq b \leq 4$, $In_aN_b$, wobei $1 \leq a \leq 3$ und $1 \leq b \leq 4$, $Ga_aNb$, wobei $1 \leq a \leq 3$ und $1 \leq b \leq 4$, $Ti_aN_b$, wobei $1 \leq a \leq 3$ und $1 \leq b \leq 4$, $Zr_aN_b$, wobei $1 \leq a \leq 3$ und $1 \leq b \leq 4$, $Nb_aN_b$, wobei $1 \leq a \leq 3$ und $1 \leq b \leq 4$ oder eine Kombination davon ist oder wobei die Verbindung der Formel 2 $Li_3N$, $AlN$, $Zn_3N_2$, $Sn_3N_4$, $Si_3N_4$, $Ge_3N_4$, $Cu_3N$ oder eine Kombination davon ist.

3. Negativelektroden-Festelektrolyt-Unteranordnung nach Ansprüchen 1 oder 2, wobei die erste negative Aktivmaterialschicht ferner eine Verbindung umfasst, die dargestellt ist von Formel 3:

Formel 3 $\quad\quad M2_aO_b$

wobei, in Formel 3, M2 das zweite Metall ist und Lithium ist, ein Element, das fähig ist zum Bilden einer Verbindung oder einer Legierung mit Lithium und Stickstoff oder einer Kombination davon, und

$$1 \leq a \leq 20 \text{ und } 1 \leq b \leq 10;$$

vorzugsweise wobei, in Formel 3, das zweite Metall Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La oder eine Kombination davon ist; vorzugsweise, wobei die Verbindung der Formel 3 $SnO_2$, $CuO$, $SiO_2$, $GeO$, $Al_2O_3$, $ZnO_2$ oder eine Kombination davon ist.

4. Negativelektroden-Festelektrolyt-Unteranordnung nach einem der Ansprüche 1-3, wobei die erste negative Aktiv-materialschicht ein Gemisch aus $Li_xSn_y$, wobei $1 \leq x \leq 3$ und $1 \leq y \leq 3$, und $Li_aN_b$, wobei $1 \leq a \leq 3$ und $1 \leq b \leq 4$, ein Gemisch aus $Li_xSn_y$, wobei $1 \leq x \leq 3$ und $1 \leq y \leq 3$, $Sn_aN_b$, wobei $1 \leq a \leq 3$ und $1 \leq b \leq 4$, und $SnO_2$, ein Gemisch aus Li, $Cu_xN_y$, wobei $1 \leq x \leq 3$ und $1 \leq y \leq 3$, und $Li_xN_y$, wobei $x=3$ und $y=1$, ein Gemisch aus $Li_xCu_y$, wobei $1 \leq x \leq 3$ und $1 \leq y \leq 3$, und $Li_aN_b$, wobei $1 \leq a \leq 3$ und $1 \leq b \leq 4$, ein Verbundstoff aus $Li_xSn_y$, wobei $1 \leq x \leq 3$ und $1 \leq y \leq 3$, und $Li_aN_b$, wobei $1 \leq a \leq 3$ und $1 \leq b \leq 4$, ein Verbundstoff aus $Li_xSn_y$, wobei $1 \leq x \leq 3$ und $1 \leq y \leq 3$, $Sn_aN_b$, wobei $1 \leq a \leq 3$ und $1 \leq b \leq 4$, und $SnO_2$, ein Verbundstoff aus Li, $Cu_xN_y$, wobei $1 \leq x \leq 3$ und $1 \leq y \leq 3$, und $Li_xN_y$, wobei $x=3$ und $y=1$, ein Verbundstoff aus $Li_xCu_y$, wobei $1 \leq x \leq 3$ und $1 \leq y \leq 3$, und $Li_aN_b$, wobei $1 \leq a \leq 3$ und $1 \leq b \leq 4$, oder eine Kombination davon ist.

5. Negativelektroden-Festelektrolyt-Unteranordnung nach einem der Ansprüche 1-4, wobei eine Dicke der ersten negativen Aktivmaterialschicht in einem Spektrum von 1 Nanometer bis 100 Mikrometer liegt; und/oder

wobei das dritte Metallmaterial der Zwischenschicht ein Gemisch aus einer Verbindung der Formel 4 und einer Verbindung der Formel 5, ein Verbundstoff aus der Verbindung der Formel 4 und der Verbindung der Formel 5 oder eine Kombination davon ist:

Formel 4         $Li_a\text{-}M3_b\text{-}O_c$,

wobei, in Formel 4, M3 das dritte Metall ist und Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La oder eine Kombination davon ist, und

$$1 \leq a \leq 20, \; 1 \leq b \leq 10 \text{ und } 1 \leq c \leq 10,$$

Formel 5         $M3_cO_d$

wobei, in Formel 5, M3 das dritte Metall ist und Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La oder eine Kombination davon ist, und

$$1 \leq c \leq 20 \text{ und } 1 \leq d \leq 30.$$

6. Negativelektroden-Festelektrolyt-Unteranordnung nach einem der Ansprüche 1-5, wobei das dritte Metallmaterial ein Verbundstoff aus $Li_a\text{-}Sn_b\text{-}O_c$, wobei $0<a \leq 9$, $0<b \leq 3$ und $0<c \leq 7$, und $Sn_cO_d$, wobei $0<c \leq 3$ und $0<d \leq 4$, ein Verbundstoff aus $Li_a\text{-}Cu_b\text{-}O_c$, wobei $0<a \leq 9$, $0<b \leq 3$ und $0<c \leq 7$, und $Cu_cO_d$, wobei $0<c \leq 5$ und $0<d \leq 24$, ein Gemisch aus $Li_a\text{-}Sn_b\text{-}O_c$, wobei $0<a \leq 9$, $0<b \leq 3$, und $0<c \leq 7$, und $Sn_cO_d$, wobei $0<c \leq 3$ und $0<d \leq 4$, ein Gemisch aus $Li_a\text{-}Cu_b\text{-}O_c$, wobei $0<a \leq 9$, $0<b \leq 3$ und $0<c \leq 7$, und $Cu_cO_d$, wobei $0<c \leq 5$ und $0<d \leq 24$, oder eine Kombination davon ist.

7. Negativelektroden-Festelektrolyt-Unteranordnung nach einem der Ansprüche 1-6, wobei die Dicke der Zwischenschicht in einem Spektrum von 5 Nanometer bis 100 Nanometer liegt, und wobei ein Volumen der ersten negativen Aktivmaterialschicht nach dem Laden der Festkörpersekundärbatterie 200 Prozent oder weniger als ein Volumen der ersten negativen Aktivmaterialschicht nach dem Entladen ist.

8. Negativelektroden-Festelektrolyt-Unteranordnung nach einem der Ansprüche 1-7, ferner umfassend eine zweite negative Aktivmaterialschicht, die zwischen dem Negativelektrodenstromkollektor und der ersten negativen Aktivmaterialschicht angeordnet ist, und wobei die zweite negative Aktivmaterialschicht ein viertes Metallmaterial umfasst und das vierte Metallmaterial ein viertes Metall, eine Lithiumlegierung aus Lithium und dem vierten Metall oder eine Kombination davon ist,

wobei das vierte Metall ein Element der Gruppen 2 bis 15 ist und wobei das vierte Metall Lithium, Silber, Zinn, Indium, Silizium, Gallium, Aluminium, Titan, Zirkonium, Niob, Germanium, Antimon, Wismut, Zink, Gold, Platin, Palladium, Nickel, Eisen, Kobalt, Chrom, Magnesium, Cäsium, Lanthan, Wolfram, Tellur, eine Lithiumlegierung oder eine Kombination davon umfasst, wobei die Lithiumlegierung

Lithium und

Silber, Zinn, Indium, Silizium, Gallium, Aluminium, Titan, Zirkonium, Niob, Germanium, Antimon, Wismut, Zink, Gold, Platin, Palladium, Nickel, Eisen, Kobalt, Chrom, Magnesium, Cäsium, Lanthan, Wolfram, Tellur oder eine Kombination davon, wobei das vierte Metall das Lithiummetall, die Lithiumlegierung oder eine Kombination davon ist, umfasst.

9. Negativelektroden-Festelektrolyt-Unteranordnung nach einem der Ansprüche 1-8, wobei vier bis fünf Spitzen in einem Bereich von 393 Elektronenvolt bis 405 Elektronenvolt in einem Graphen der Intensität gegenüber der Bindungsenergie beobachtet werden, wenn die erste negative Aktivmaterialschicht durch Röntgen-Photoelektronenspektroskopie analysiert wird.

10. Festkörpersekundärbatterie, umfassend:

eine positive Elektrode; und

die Negativelektroden-Festelektrolyt-Unteranordnung nach einem der Ansprüche 1-9, die auf der positiven Elektrode angeordnet ist,

wobei der feste Elektrolyt zwischen der positiven Elektrode und der negativen Elektrode ist;

vorzugsweise, wobei der Festelektrolyt einen Oxidfestelektrolyten, einen Sulfidfestelektrolyten oder eine Kombination davon umfasst und wobei der Oxidfestelektrolyt $Li_{1+x-y}Al_xTi_{2-x}Si_yP_3O_{12}$, wobei $0<x<2$ und $0\leq y<3$, $Li_3PO_4$, $Li_xTi_y(PO_4)_3$, wobei $0<x<2$ und $0<y<3$, $Li_xAl_yTi_z(PO_4)_3$, wobei $0<x<2$, $0<y<1$ und $0<z<3$, $Li_{1+x+y}(Al_pGa_{1-p})_x(Ti_qGe_{1-q})_{2-x}Si_yP_{3-y}O_{12}$, wobei $0\leq x\leq1$, $0\leq y\leq1$, $0\leq p\leq1$ und $0\leq q\leq1$, $Li_xLa_yTiO_3$, wobei $0<x<2$ und $0<y<3$, $Li_2O$, $LiOH$, $Li_2CO_3$, $LiAlO_2$, $Li_2O\text{-}Al_2O_3\text{-}SiO_2\text{-}P_2O_5\text{-}TiO_2\text{-}GeO_2$, $Li_{3+x}La_3M_2O_{12}$ ist, wobei M Te, Nb oder Zr ist und x eine ganze Zahl von 1 bis 10 oder eine Kombination davon ist und wobei der Oxidfestelektrolyt ein granatartiger Festelektrolyt ist und der granatartige Festelektrolyt ein Oxid umfasst, das dargestellt ist von Formel 6:

$$\text{Formel 6} \qquad (Li_xM1_y)(La_{a1}M2_{a2})_{3-\delta}(Zr_{b1}M3_{b2})_{2-\omega}O_{12-z}X_z,$$

wobei, in Formel 6, M1 Wasserstoff, Eisen, Gallium, Aluminium, Bor, Beryllium oder eine Kombination davon ist, M2 Barium, Calcium, Strontium, Yttrium, Wismut, Praseodym, Neodym, Actinium, Samarium, Gadolinium oder eine Kombination davon ist,

M3 Hafnium, Zinn, Niob, Titan, Vanadium, Chrom, Mangan, Kobalt, Nickel, Kupfer, Molybdän, Wolfram, Tantal, Magnesium, Technetium, Ruthenium, Palladium, Iridium, Scandium, Kadmium, Indium, Antimon, Tellur, Thallium, Platin, Silizium, Aluminium oder eine Kombination davon ist,

$$3\leq x\leq8, \ 0\leq y<2, \ -0{,}2\leq\delta\leq0{,}2, \ -0{,}2\leq\omega\leq0{,}2 \text{ und } 0\leq z\leq2,$$

$$a1+a2=1, \ 0<a1\leq1 \text{ und } 0\leq a2<1,$$

$$b1+b2=1, \ 0<b1<1 \text{ und } 0\leq b2<1$$

und

X ein einwertiges Anion, ein zweiwertiges Anion, ein dreiwertiges Anion oder eine Kombination davon ist und wobei der Oxidfestelektrolyt ein Oxid ist, das dargestellt ist von Formel 7:

$$\text{Formel 7} \qquad Li_{3+x}La_3Zr_{2-a}M_aO_{12}$$

wobei, in Formel 7, M Al, Ga, In, Si, Ge, Sn, Sb, Bi, Sc, Y, Ti, Hf, V, Nb, Ta, W oder eine Kombination davon ist, und x eine ganze Zahl von 1 bis 10 und $0\leq a<2$ ist und wobei der Sulfidfestelektrolyt $Li_2S\text{-}P_2S_5$, $Li_2S\text{-}P_2S_5\text{-}LiX$, wobei X Halogen ist, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ ist, wobei m und n positive ganze Zahlen sind und Z eines von Ge, Zn oder Ga, $Li_2S\text{-}GeS_2$, $Li_2S\text{-}SiS_2\text{-}Li_3PO_4$, $Li_2S\text{-}SiS_2\text{-}Li_pMO_q$ ist, wobei p und q positive ganze Zahlen sind, und M eines von P, Si, Ge, B, Al, Ga oder In, $Li_{7-x}PS_{6-x}Cl_x$, wobei $0<x<2$, $Li_{7-x}PS_{6-x}Br_x$, wobei $0<x<2$, $Li_{7-x}PS_{6-x}I_x$, wobei $0<x<2$, oder eine Kombination davon ist.

11. Festkörpersekundärbatterie nach Anspruch 10, wobei der Negativelektrodenstromkollektor, die Zwischenschicht, die erste negative Aktivmaterialschicht und ein Bereich zwischen dem Negativelektrodenstromkollektor, der Zwischenschicht und der ersten negativen Aktivmaterialschicht ein lithiummetallfreier Bereich ist, der in einem Anfangszustand oder einem Zustand nach Entladung der Festkörpersekundärbatterie kein Lithiummetall umfasst.

12. Verfahren zur Herstellung der Festkörpersekundärbatterie nach Ansprüchen 10 oder 11, wobei das Verfahren umfasst:

Bereitstellen der positiven Elektrode;
Anordnen des Festelektrolyten auf der positiven Elektrode;
Anordnen der Zwischenschicht auf einer ersten Oberfläche des Festelektrolyten gegenüber einer zweiten Oberfläche des Festelektrolyten, worauf die positive Elektrode angeordnet ist; Anordnen der ersten negativen Aktivmaterialschicht auf der Zwischenschicht und gegenüber dem Festelektrolyten; und
Anordnen des Negativelektrodenstromkollektors auf der ersten negativen Aktivmaterialschicht gegenüber der Zwischenschicht, um die Festkörpersekundärbatterie herzustellen,
wobei die erste negative Aktivmaterialschicht ein Gemisch aus einer Verbindung der Formel 1 und einer Verbindung der Formel 2, einen Verbundstoff aus der Verbindung der Formel 1 und der Verbindung der Formel 2 oder eine Kombination davon umfasst,

$$\text{Formel 1} \qquad \text{Li}_x\text{M1}_y$$

wobei, in Formel 1, M1 das erste Metall ist und ein Element ist, das fähig ist zum Bilden einer Verbindung oder einer Legierung mit Lithium und Sauerstoff, und

$$0 \leq x \leq 20 \text{ und } 1 \leq y \leq 10,$$

$$\text{Formel 2} \qquad \text{M2}_a\text{N}_b$$

wobei, in Formel 2, M2 das zweite Metall ist und Lithium ist, ein Element, das fähig ist zum Bilden einer Verbindung oder einer Legierung mit Lithium und Stickstoff oder einer Kombination davon, und

$$1 \leq x \leq 15 \text{ und } 1 \leq b \leq 10;$$

vorzugsweise, wobei das Anordnen der Zwischenschicht und der ersten negativen Aktivmaterialschicht umfasst:

Abscheiden des ersten Metalls auf dem Festelektrolyten in einer Stickstoffatmosphäre, um eine erste Schicht umfassend eine erste Metallnitridschicht zu bilden; und
Inkontaktbringen der ersten Schicht mit Lithium,
Laden der Festkörpersekundärbatterie, um Lithium an die erste Schicht zu liefern, Wärmebehandeln der ersten Schicht oder eine Kombination davon,
um gleichzeitig die Zwischenschicht und die erste negative Aktivmaterialschicht unter Verwendung der ersten Schicht zu bilden.

13. Verfahren nach Anspruch 12,
wobei das Anordnen der Zwischenschicht und der ersten negativen Aktivmaterialschicht umfasst:

Anordnen des ersten Metalls auf dem Festelektrolyten in einer Sauerstoffatmosphäre, um eine zweite Schicht umfassend eine erste Metalloxidschicht zu bilden und um daraus die Zwischenschicht zu bilden; und
Abscheiden des ersten Metalls auf der zweiten Schicht in einer Stickstoffatmosphäre, um eine erste Schicht umfassend die erste Metallnitridschicht zu bilden und um daraus die erste negative Aktivmaterialschicht zu bilden.

14. Verfahren nach Ansprüchen 12 oder 13, ferner umfassend das Laden der Festkörpersekundärbatterie, um eine Legierung aus dem zweiten Metall in der ersten negativen Aktivmaterialschicht und Lithium zu bilden.

15. Verfahren nach einem der Ansprüche 12-14, ferner umfassend:

Bereitstellen einer zweiten negativen Aktivmaterialschicht zwischen dem Negativelektrodenstromkollektor und der ersten negativen Aktivmaterialschicht,

wobei die zweite negative Aktivmaterialschicht ein viertes Metallmaterial umfasst, und

das vierte Metallmaterial ein viertes Metall, eine Lithiumlegierung aus Lithium und dem vierten Metall oder eine Kombination davon ist,

wobei das vierte Metall ein Element der Gruppen 2 bis 15 ist und wobei das vierte Metall Silber, Zinn, Indium, Silizium, Gallium, Aluminium, Titan, Zirkonium, Niob, Germanium, Antimon (Sb), Wismut (Bi), Zink (Zn), Gold (Au), Platin (Pt), Palladium (Pd), Nickel (Ni), Eisen (Fe), Kobalt (Co), Chrom (Cr), Magnesium (Mg), Cäsium (Cs), Cer (Ce), Lanthan (La), Wolfram (W), Tellur (Te), eine Lithiumlegierung oder eine Kombination davon umfasst,

wobei die Lithiumlegierung Silber (Ag), Zinn (Sn), Indium (In), Silizium (Si), Gallium (Ga), Aluminium (Al), Titan (Ti), Zirkonium (Zr), Niob (Nb), Germanium (Ge), Antimon (Sb), Wismut (Bi), Zink (Zn), Gold (Au), Platin (Pt), Palladium (Pd), Nickel (Ni), Eisen (Fe), Kobalt (Co), Chrom (Cr), Magnesium (Mg), Cäsium (Cs), Cer (Ce), Lanthan (La), Wolfram (W), Tellur (Te) oder eine Kombination davon umfasst.

**Revendications**

1. Sous-ensemble électrode négative-électrolyte solide pour une batterie secondaire entièrement solide comprenant :

un collecteur de courant d'électrode négative;

une première couche de matériau actif négatif disposée sur le collecteur de courant d'électrode négative ;

une couche intermédiaire disposée sur la première couche de matériau actif négatif et opposée au collecteur de courant d'électrode négative ; et

un électrolyte solide disposé sur la couche intermédiaire et opposé à la première couche de matériau actif négatif,

dans lequel la première couche de matériau actif négatif comprend un mélange d'un composé de Formule 1 et d'un composé de Formule 2, un composite du composé de Formule 1 et du composé de Formule 2, ou une combinaison de ceux-ci,

Formule 1 $\quad\quad\quad Li_xM1_y$

dans lequel, dans la Formule 1, M1 est un premier métal et est un élément capable de former un composé ou un alliage avec le lithium et l'oxygène, et

$$0 \leq x \leq 20 \text{ et } 1 \leq y \leq 10,$$

Formule 2 $\quad\quad\quad M2_aN_b$

dans lequel, dans la Formule 2, M2 est un deuxième métal et est le lithium, un élément capable de former un composé ou un alliage avec le lithium et l'azote, ou une combinaison de ceux-ci, et

$$1 \leq a \leq 15 \text{ et } 1 \leq b \leq 10,$$

dans lequel la couche intermédiaire comprend un troisième matériau métallique, l'oxyde de lithium ou une combinaison de ceux-ci, et

le troisième matériau métallique comprend un troisième oxyde métallique, un oxyde comprenant un troisième métal et le lithium, ou une combinaison de ceux-ci,

dans lequel le troisième métal est un élément des groupes 2 à 15.

2. Sous-ensemble électrode négative-électrolyte solide de la revendication 1, dans lequel, dans la Formule 1, le premier métal est l'aluminium, le zinc, l'étain, le silicium, le germanium, le cuivre, l'indium, le gallium, le titane, le zirconium, le niobium, l'antimoine, le bismuth, l'or, le platine, le palladium, le nickel, le fer, le cobalt, le chrome, le magnésium, le césium, le cérium, l'argent, le sodium, le potassium, le calcium, l'yttrium, le tantale, le hafnium, le baryum, le vanadium, le strontium, le tellure, le lanthane, ou une combinaison de ceux-ci, dans la Formule 2, le deuxième métal est l'aluminium, le zinc, l'étain, le silicium, le germanium, le cuivre, l'indium, le gallium, le titane, le zirconium, le niobium, l'antimoine, le bismuth, l'or, le platine, le palladium, le nickel, le fer, le cobalt, le chrome, le magnésium, le césium, le cérium, l'argent, le sodium, le potassium, le calcium, l'yttrium, le tantale, le hafnium, le baryum, le vanadium, le strontium, le tellure, le lanthane, ou une combinaison de ceux-ci, dans lequel le composé de Formule 1 est $Li_3Al$, $Li_2Zn$, $Li_4Sn$, $Li_xSi_y$ où $1{\leq}x{\leq}3$ et $1{\leq}y{\leq}3$, $Li_xGe_y$ où $1{\leq}x{\leq}3$ et $1{\leq}y{\leq}3$, $Li_xCu_y$ où $1{\leq}x{\leq}3$ et $1{\leq}y{\leq}3$, $Li_xSn$ où $0{<}x{<}5$, $Li_xZn$ où $0{<}x{<}5$, $Li_xAl$ où $0{<}x{<}5$, $Li_xSb$ où $0{<}x{<}4$, $Li_xSi$ où $0{<}x{<}5$, $Li_xAu$ où $0{<}x{<}5$, $Li_xAg$ où $0{<}x{<}10$, $Li_xIn$ où $0{<}x{<}5$, $Li_xBi$ où $0{<}x{<}5$, $Li_xGa$ où $0{<}x{<}5$, $Li_xTe$ où $0{<}x{<}5$, $Li_xGe$ où $0{<}x{<}5$, $Li_xMg$ où $0{<}x{<}7$, ou une combinaison de ceux-ci, et dans lequel le composé de Formule 2 est $Li_3N$, $Al_aN_b$ où $1{\leq}a{\leq}3$ et $1{\leq}b{\leq}4$, $Zn_aN_b$ où $1{\leq}a{\leq}3$ et $1{\leq}b{\leq}4$, $Sn_aN_b$ où $1{\leq}a{\leq}3$ et $1{\leq}b{\leq}4$, $Si_aN_b$ où $1{\leq}a{\leq}3$ et $1{\leq}b{\leq}4$, $Ge_aN_b$ où $1{\leq}a{\leq}3$ et $1{\leq}b{\leq}4$, $Cu_aN_b$ où $1{\leq}a{\leq}3$ et $1{\leq}b{\leq}4$, $In_aN_b$ où $1{\leq}a{\leq}3$ et $1{<}b{\leq}4$, $Ga_aN_b$ où $1{\leq}a{\leq}3$ et $1{\leq}b{\leq}4$, $Ti_aN_b$ où $1{\leq}a{\leq}3$ et $1{\leq}b{\leq}4$, $Zr_aN_b$ où $1{\leq}a{\leq}3$ et $1{<}b{\leq}4$, $Nb_aN_b$ où $1{\leq}a{\leq}3$ et $1{\leq}b{\leq}4$, ou une combinaison de ceux-ci, ou

dans lequel le composé de Formule 2 est $Li_3$, $AlN$, $Zn_3N_2$, $Sn_3N_4$, $Si_3N_4$, $Ge_3N_4$, $Cu_3N$, ou une combinaison de ceux-ci.

3. Sous-ensemble électrode négative-électrolyte solide de l'une des revendications 1 ou 2, dans lequel la première couche de matériau actif négatif comprend en outre un composé représenté par la Formule 3 :

Formule 3        M2aOb

lequel, dans la Formule 3, M2 est le deuxième métal et est le lithium, un élément capable de former un composé ou un alliage avec le lithium et l'azote, ou une combinaison de ceux-ci, et

$$1{\leq}a{\leq}20 \text{ et } 1{\leq}b{\leq}10 \text{ ;}$$

de préférence dans lequel, dans la Formule 3, le deuxième métal est Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La, ou une combinaison de ceux-ci ; de préférence dans lequel le composé de Formule 3 est $SnO_2$, $CuO$, $SiO_2$, $GeO$, $Al_2O_3$, $ZnO_2$ ou une combinaison de ceux-ci.

4. Sous-ensemble électrode négative-électrolyte solide de l'une quelconque des revendications 1 à 3, dans lequel la première couche de matériau actif négatif est un mélange de $Li_xSn_y$ où $1{\leq}x{\leq}3$ et $1{\leq}y{\leq}3$, et de $Li_aN_b$ où $1{\leq}a{\leq}3$ et $1{\leq}b{\leq}4$, un mélange de $Li_xSn_y$ où $1{\leq}x{\leq}3$ et $1{\leq}y{\leq}3$, de $Sn_aN_b$ où $1{\leq}a{\leq}3$ et $1{\leq}b{\leq}4$, et de $SnO_2$, un mélange de Li, de $Cu_xN_y$ où $1{\leq}x{\leq}3$ et $1{\leq}y{\leq}3$, et de $Li_xN_y$ où $x{=}3$ et $y{=}1$, un mélange de $Li_xCu_y$ où $1{\leq}x{\leq}3$ et $1{\leq}y{\leq}3$ et de $Li_aN_b$ où $1{\leq}a{\leq}3$ et $1{\leq}b{\leq}4$, un composite de $Li_xSn_y$ où $1{\leq}x{\leq}3$ et $1{\leq}y{\leq}3$, et de $Li_aN_b$ où $1{\leq}a{\leq}3$ et $1{\leq}b{\leq}4$, un composite de $Li_xSn_y$ où $1{\leq}x{\leq}3$ et $1{\leq}y{\leq}3$, de $Sn_aN_b$ où $1{\leq}a{\leq}3$ et $1{\leq}b{\leq}4$, et de $SnO_2$, un composite de Li, de $Cu_xN_y$ où $1{\leq}x{\leq}3$ et $1{\leq}y{\leq}3$, et de $Li_xN_y$ où $x{=}3$ et $y{=}1$, un composite de $Li_xCu_y$ où $1{\leq}x{\leq}3$ et $1{\leq}y{\leq}3$ et de $Li_aN_b$ où $1{\leq}a{\leq}3$ et $1{\leq}b{\leq}4$, ou une combinaison de ceux-ci.

5. Sous-ensemble électrode négative-électrolyte solide de l'une quelconque des revendications 1 à 4, dans lequel une épaisseur de la première couche de matériau actif négatif est comprise dans une plage de 1 nanomètre à 100 micromètres ; et/ou

dans lequel le troisième matériau métallique de la couche intermédiaire est un mélange d'un composé de Formule 4 et d'un composé de Formule 5, un composite du composé de Formule 4 et du composé de Formule 5, ou une combinaison de ceux-ci :

Formule 4        $Li_a$-$M3_b$-$O_c$

dans lequel, dans la Formule 4, M3 est le troisième métal et est Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La, ou une combinaison de ceux-ci, et

$$1{\leq}a{\leq}20, \ 1{\leq}b{\leq}10 \text{ et } 1{\leq}c{\leq}10,$$

Formule 5        $M3_cO_d$

dans lequel, dans la Formule 5, M3 est le troisième métal et est Al, Zn, Sn, Si, Ge, Cu, In, Ga, Ti, Zr, Nb, Sb, Bi, Au, Pt, Pd, Ni, Fe, Co, Cr, Mg, Ce, Ag, Na, K, Ca, Y, Ta, Hf, Ba, V, Sr, Te, La, ou une combinaison de ceux-ci, et

$$1 \leq c \leq 20 \text{ et } 1 \leq d \leq 30.$$

6. Sous-ensemble électrode négative-électrolyte solide de l'une quelconque des revendications 1 à 5, dans lequel le troisième matériau métallique est un composite de $Li_a$-$Sn_b$-$O_c$ où $0<a\leq9$, $0<b\leq3$ et $0<c\leq7$, et de $Sn_cO_d$ où $0<c\leq3$ et $0<d\leq4$, un composite de $Li_a$-$Cu_b$-$O_c$ où $0<a\leq9$, $0<b\leq3$ et $0<c\leq7$, et de $Cu_cO_d$ où $0<c\leq5$ et $0<d\leq24$, un mélange de $Li_a$-$Sn_b$-$O_c$ où $0<a\leq9$, $0<b\leq3$ et $0<c\leq7$, et de $Sn_cO_d$ où $0<c\leq3$ et $0<d\leq4$, un mélange de $Li_a$-$Cu_b$-$O_c$ où $0<a\leq9$, $0<b\leq3$ et $0<c\leq7$, et de $Cu_cO_d$ où $0<c\leq5$ et $0<d\leq24$, ou une combinaison de ceux-ci.

7. Sous-ensemble électrode négative-électrolyte solide de l'une quelconque des revendications 1 à 6, dans lequel une épaisseur de la couche intermédiaire est comprise dans une plage de 5 nanomètres à 100 nanomètres, et dans lequel un volume de la première couche de matériau actif négatif après la charge de la batterie secondaire entièrement solide est de 200 pour cent ou moins d'un volume de la première couche de matériau actif négatif après la décharge.

8. Sous-ensemble électrode négative-électrolyte solide de l'une quelconque des revendications 1 à 7, comprenant en outre une seconde couche de matériau actif négatif disposée entre le collecteur de courant d'électrode négative et la première couche de matériau actif négatif, et dans lequel la seconde couche de matériau actif négatif comprend un quatrième matériau métallique, et le quatrième matériau métallique est un quatrième métal, un alliage de lithium de lithium et du quatrième métal, ou une combinaison de ceux-ci,

dans lequel le quatrième métal est un élément des groupes 2 à 15, et dans lequel le quatrième métal comprend du lithium, de l'argent, de l'étain, de l'indium, du silicium, du gallium, de l'aluminium, du titane, du zirconium, du niobium, du germanium, de l'antimoine, du bismuth, du zinc, de l'or, du platine, du palladium, du nickel, du fer, du cobalt, du chrome, du magnésium, du césium, du lanthane, du tungstène, du tellure, un alliage de lithium ou une combinaison de ceux-ci,
dans lequel l'alliage de lithium comprend
du lithium et
de l'argent, de l'étain, de l'indium, du silicium, du gallium, de l'aluminium, du titane, du zirconium, du niobium, du germanium, de l'antimoine, du bismuth, du zinc, de l'or, du platine, du palladium, du nickel, du fer, du cobalt, du chrome, du magnésium, du césium, du lanthane, du tungstène, du tellure, ou une combinaison de ceux-ci, dans lequel le quatrième métal est le lithium métal, l'alliage de lithium, ou une combinaison de ceux-ci.

9. Sous-ensemble électrode négative-électrolyte solide de l'une quelconque des revendications 1 à 8, dans lequel quatre à cinq pics sont observés dans une région de 393 électronvolts à 405 électronvolts dans un graphique d'intensité en fonction de l'énergie de liaison, lorsque la première couche de matériau actif négatif est analysée par spectroscopie de photoélectrons à rayons X.

10. Batterie secondaire entièrement solide comprenant :

une électrode positive ; et
le sous-ensemble électrode négative-électrolyte solide de l'une quelconque des revendications 1 à 9 disposé sur l'électrode positive,
dans lequel l'électrolyte solide se trouve entre l'électrode positive et l'électrode négative ;
de préférence dans lequel l'électrolyte solide comprend un électrolyte solide à base d'oxyde, un électrolyte solide à base de sulfure ou une combinaison de ceux-ci, et dans lequel l'électrolyte solide à base d'oxyde est $Li_{1+x+y}Al_xTi_{2-x}Si_yP_{3-y}O_{12}$ où $0<x<2$ et $0\leq y<3$, $Li_3PO_4$, $Li_xTi_y(PO_4)_3$ où $0<x<2$ et $0<y<3$, $Li_xAl_yTi_z(PO_4)_3$ où $0<x<2$, $0<y<1$ et $0<z<3$, $Li_{1+x+y}(Al_pGa_{1-p})_x(Ti_qGe_{1-q})_{2-x}Si_yP_{3-y}O_{12}$ où $0\leq x\leq1$, $0\leq y\leq1$, $0\leq p\leq1$ et $0\leq q\leq1$, $Li_xLa_yTiO_3$ où $0<x<2$ et $0<y<3$, $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ où M est Te, Nb ou Zr, et x est un nombre entier de 1 à 10, ou une combinaison de ceux-ci, et dans lequel l'électrolyte solide à base d'oxyde est un électrolyte solide de type grenat, et l'électrolyte solide de type grenat comprend un oxyde représenté par la Formule 6 :

Formule 6 $\qquad (Li_xM1_y)(La_{a1}M2_{a2})_{3-\delta}(Zr_{b1}M3_{b2})_{2-\omega}O_{12-z}X_z$

dans lequel, dans la Formule 6, M1 est l'hydrogène, le fer, le gallium, l'aluminium, le bore, le béryllium ou une combinaison de ceux-ci,
M2 est le baryum, le calcium, le strontium, l'yttrium, le bismuth, le praséodyme, le néodyme, l'actinium, le samarium, le gadolinium ou une combinaison de ceux-ci,

M3 est le hafnium, l'étain, le niobium, le titane, le vanadium, le chrome, le manganèse, le cobalt, le nickel, le cuivre, le molybdène, le tungstène, le tantale, le magnésium, le technétium, le ruthénium, le palladium, l'iridium, le scandium, le cadmium, l'indium, l'antimoine, le tellure, le thallium, le platine, le silicium, l'aluminium ou une combinaison de ceux-ci,

$$3 \leq x \leq 8,\ 0 \leq y \leq 2,\ -0{,}2 \leq \delta \leq 0{,}2,\ -0{,}2 \leq \omega \leq 0{,}2 \text{ et } 0 \leq z \leq 2,$$

$$a1 + a2 = 1,\ 0 < a1 \leq 1 \text{ et } 0 \leq a2 < 1,$$

$$b1 + b2 = 1,\ 0 < b1 < 1,\ \text{et } 0 \leq b2 < 1,$$

et

X est un anion monovalent, un anion divalent, un anion trivalent ou une combinaison de ceux-ci, et dans lequel l'électrolyte solide à base d'oxyde est un oxyde représenté par la Formule 7 :

$$\text{Formule 7} \qquad Li_{3+x}La_3Zr_{2-a}M_aO_{12}$$

dans lequel, dans la Formule 7, M est Al, Ga, In, Si, Ge, Sn, Sb, Bi, Sc, Y, Ti, Hf, V, Nb, Ta, W ou une combinaison de ceux-ci, et

x est un nombre entier de 1 à 10, et $0 \leq a < 2$, et dans lequel l'électrolyte solide au sulfure est $Li_2S\text{-}P_2S_5$, $Li_2S\text{-}P_2S_5\text{-}LiX$ où X est un halogène, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ où m et n sont des nombres entiers positifs, et Z est l'un de Ge, Zn ou Ga, $Li_2S\text{-}GeS_2$, $Li_2S\text{-}SiS_2\text{-}Li_3PO_4$, $Li_2S\text{-}SiS_2\text{-}Li_PMO_q$ où p et q sont des nombres entiers positifs et M est l'un de P, Si, Ge, B, Al, Ga, ou In, $Li_{7-x}PS_{6-x}Cl_x$ où $0 < x < 2$, $Li_{7-x}PS_{6-x}Br_x$ où $0 < x < 2$, $Li_{7-x}PS_{6-x}I_x$ où $0 < x < 2$, ou une combinaison de ceux-ci.

11. Batterie secondaire entièrement solide de la revendication 10, dans laquelle le collecteur de courant d'électrode négative, la couche intermédiaire, la première couche de matériau actif négatif et une région entre le collecteur de courant d'électrode négative, la couche intermédiaire et la première couche de matériau actif négatif sont une région exempte de lithium métal qui ne comprend pas de lithium métal dans un état initial ou un état après décharge de la batterie secondaire entièrement solide.

12. Procédé de préparation de la batterie secondaire entièrement solide de l'une des revendications 10 ou 11, le procédé comprenant :

la fourniture de l'électrode positive ;

la disposition de l'électrolyte solide sur l'électrode positive ;

la disposition de la couche intermédiaire sur une première surface de l'électrolyte solide opposée à une seconde surface de l'électrolyte solide sur laquelle est disposée l'électrode positive ;

la disposition de la première couche de matériau actif négatif sur la couche intermédiaire et opposée à l'électrolyte solide ; et

la disposition du collecteur de courant d'électrode négative sur la première couche de matériau actif négatif opposée à la couche intermédiaire, pour préparer la batterie secondaire entièrement solide,

dans lequel la première couche de matériau actif négatif comprend un mélange d'un composé de Formule 1 et d'un composé de Formule 2, un composite du composé de Formule 1 et du composé de Formule 2, ou une combinaison de ceux-ci,

$$\text{Formule 1} \qquad Li_xM1_y$$

dans lequel, dans la Formule 1, M1 est le premier métal et est un élément capable de former un composé ou un alliage avec le lithium et l'oxygène, et

$$0 \leq x \leq 20 \text{ et } 1 \leq y \leq 10,$$

Formule 2          $M2_a N_b$

dans lequel, dans la Formule 2, M2 est le deuxième métal et est le lithium, un élément capable de former un composé ou un alliage avec le lithium et l'azote, ou une combinaison de ceux-ci, et

$$1 \leq x \leq 15 \text{ et } 1 \leq b \leq 10 \ ;$$

de préférence dans lequel la disposition de la couche intermédiaire et de la première couche de matériau actif négatif comprend :

la disposition du premier métal sur l'électrolyte solide dans une atmosphère d'azote pour former une première couche comprenant une première couche de nitrure de métal ; et
la mise en contact de la première couche avec du lithium,
le chargement de la batterie secondaire entièrement solide pour fournir du lithium à la première couche,
le traitement thermique de la première couche, ou une combinaison de ceux-ci,
pour former simultanément la couche intermédiaire et la première couche de matériau actif négatif en utilisant la première couche.

13. Procédé de la revendication 12, dans lequel la disposition de la couche intermédiaire et de la première couche de matériau actif négatif comprend :

la disposition du premier métal sur l'électrolyte solide dans une atmosphère d'oxygène pour former une seconde couche comprenant une première couche d'oxyde métallique et pour former la couche intermédiaire à partir de celle-ci ; et
la disposition du premier métal sur la seconde couche dans une atmosphère d'azote pour former une première couche comprenant la première couche de nitrure de métal et pour former à partir de celle-ci la première couche de matériau actif négatif.

14. Procédé de l'une des revendications 12 ou 13, comprenant en outre la charge de la batterie secondaire entièrement solide pour former un alliage à partir du deuxième métal dans la première couche de matériau actif négatif et du lithium.

15. Procédé de l'une quelconque des revendications 12 à 14, comprenant en outre :

la fourniture d'une seconde couche de matériau actif négatif entre le collecteur de courant d'électrode négative et la première couche de matériau actif négatif,
dans lequel la seconde couche de matériau actif négatif comprend un quatrième matériau métallique, et
le quatrième matériau métallique est un quatrième métal, un alliage de lithium de lithium et du quatrième métal, ou une combinaison de ceux-ci,
dans lequel le quatrième métal est un élément des groupes 2 à 15, et dans lequel le quatrième métal comprend de l'argent, de l'étain, de l'indium, du silicium, du gallium, de l'aluminium, du titane, du zirconium, du niobium, du germanium, de l'antimoine (Sb), du bismuth (Bi), du zinc (Zn), de l'or (Au), du platine (Pt), du palladium (Pd), du nickel (Ni), du fer (Fe), du cobalt (Co), du chrome (Cr), du magnésium (Mg), du césium (Cs), du cérium (Ce), du lanthane (La), du tungstène (W), du tellure (Te), un alliage de lithium, ou une combinaison de ceux-ci,
dans lequel l'alliage de lithium comprend de l'argent (Ag), de l'étain (Sn), de l'indium (In), du silicium (Si), du gallium (Ga), de l'aluminium (Al), du titane (Ti), du zirconium (Zr), du niobium (Nb), du germanium (Ge), de l'antimoine (Sb), du bismuth (Bi), du zinc (Zn), de l'or (Au), du platine (Pt), du palladium (Pd), du nickel (Ni), du fer (Fe), du cobalt (Co), du chrome (Cr), du magnésium (Mg), du césium (Cs), du cérium (Ce), du lanthane (La), du tungstène (W), du tellure (Te), ou une combinaison de ceux-ci.

# FIG. 1

FIG. 2A

100nm

# FIG. 2B

50nm

FIG. 2C

Sn 57%

FIG. 2D

FIG. 2E

O 15%

# FIG. 3A

# FIG. 3B

FIG. 3C

FIG. 4A

FIG. 4B

FIG. 4C

FIG. 4D

FIG. 5A

FIG. 5B

FIG. 5C

FIG. 5D

FIG. 6A

FIG. 6B

# FIG. 6C

FIG. 6D

FIG. 6E

# FIG. 7A

EXAMPLE 2

# FIG. 7B

FIG. 7C

## FIG. 7D

FIG. 8A

FIG. 8B

# FIG. 8C

FIG. 9A

# FIG. 9B

CAPACITY PER UNIT AREA (mAh/cm$^2$)

# FIG. 10A

# FIG. 10B

FIG. 11A

# FIG. 11B

# FIG. 12A

# FIG. 12B

CAPACITY PER UNIT AREA (mAh/cm$^2$)

| | | |
|---|---|---|
| —— 0.3 mA/cm$^2$ | ···–·· 0.6 mA/cm$^2$ | |
| ········ 0.8 mA/cm$^2$ | —— 0.8 mA/cm$^2$ | |
| —·–· 1.2 mA/cm$^2$ | — — 1.5 mA/cm$^2$ | |
| ––—– 1.8 mA/cm$^2$ | —— 1.8 mA/cm$^2$ 5th cycle | |

# FIG. 13

CAPACITY PER UNIT AREA (mAh/cm$^2$)

——— 0.3 mA/cm$^2$    —··—·· 0.6 mA/cm$^2$
·········· 0.8 mA/cm$^2$    ——— 1.0 mA/cm$^2$
—·—· 1.2 mA/cm$^2$

# FIG. 14